(19) Europäisches Patentamt / European Patent Office / Office européen des brevets

(11) **EP 4 304 209 A1**

(12) **EUROPEAN PATENT APPLICATION**

(43) Date of publication:
**10.01.2024 Bulletin 2024/02**

(21) Application number: **22183748.7**

(22) Date of filing: **08.07.2022**

(51) International Patent Classification (IPC):
**H04W 4/02** (2018.01)    **H04W 4/70** (2018.01)
**H04W 4/80** (2018.01)

(52) Cooperative Patent Classification (CPC):
**H04W 4/02; H04W 4/70; H04W 4/80**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Koninklijke Philips N.V.
5656 AG Eindhoven (NL)**

(72) Inventors:
• **Dijk, Esko**
  **Eindhoven (NL)**
• **Garcia Morchon, Oscar**
  **Eindhoven (NL)**
• **Dees, Walter**
  **Eindhoven (NL)**

(74) Representative: **Philips Intellectual Property &
Standards
High Tech Campus 52
5656 AG Eindhoven (NL)**

(54) **LOW-POWER SECURE FEATURE DETERMINATION OF TAGS FOR CELLULAR NETWORKS**

(57)    The invention relates to determination of a feature of a communication device (401) that includes, for example, its identity, its type, the type of product to which the communication device (401) is attached, a location, a sensed value, and so on. In particular, the communication device (401) may be a low-power, low-complexity tag in a cellular communication network with localization functionality that cooperatively works with other nodes (411) to report tag locations to a location service (441).

**Fig. 4**

**Description**

FIELD OF THE INVENTION

The invention relates to determination of a feature, in particular - but not limited to - a location, of low-power devices in wireless networks, in particular - but not limited to - cellular networks such as fifth generation (5G) or higher generation networks.

BACKGROUND OF THE INVENTION

Out-of-coverage tags and limited-coverage tags

In a location system within a cellular network or infrastructure, multiple types of devices may participate to provide a localization functionality. These types may include, for example, tags, powerful mobile user equipment devices (UEs) (e.g., smartphones, V2X-connected vehicles, and so on), or infrastructure devices (e.g., stationary and/or mobile gNBs, V2X roadside units, and so on). A tag may be defined as a device whose unknown location is to be determined, and a node may be defined as any device participating in the localization. Some nodes may act as "anchor nodes" (also denoted as "anchors"), that is, as participating devices having a 2D or 3D position that is already known to the location system with some degree of accuracy, for example, because they are never moving (e.g., fixed infrastructure nodes), or because a cellular positioning technology is used that enables the cellular network to determine the position of a UE, or because they can use a Global Navigation Satellite System (GNSS) (e.g., a Global Positioning System (GPS)) to determine their position with high accuracy.

However, a scenario may occur in which tags are out-of-coverage (OoC) of the cellular infrastructure or are in limited coverage (LiC), i.e., a scenario in which the tag can receive transmissions from a gNB but cannot transmit back due to its limited transmit (Tx) power, or conversely in which the tag cannot receive transmissions from a gNB but can transmit to it (albeit it may be unable to determine that a gNB can hear it), for example because the tag uses a lower-cost, simpler RF receiver than the gNB. The nodes that are in coverage of the cellular infrastructure can typically act as the (main) anchor nodes.

OoC/LiC could happen for various reasons such as RF signal blockage due to objects or buildings, limited Tx power of the tag, limited Tx energy of the tag (e.g., in the case that the hardware can produce enough Tx peak power, but there is not enough energy to complete a transmission at the required output power. This case may occur, e.g., for energy-harvesting tags or battery-powered tags with a lifetime requirement), and/or entering an area with sparse network infrastructure, and/or temporary absence of mobile anchors which are otherwise statistically relied on to be present. Since nodes, such as gNBs, in the network infrastructure are mostly employed as anchor nodes, this implies that, for these OoC/LiC tags, the position cannot be estimated to a desired accuracy. Also, these OoC/LiC tags may not be able to receive relevant configuration information (e.g., transmission time schedules, reception time schedules, Tx parameters, frequency/resource information, payload/reporting formats, and so on) from the gNB(s) regarding the execution and configuration of the corresponding localization procedure.

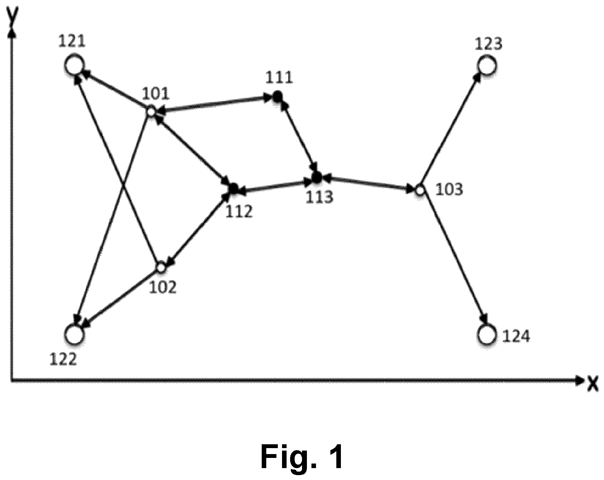

Figure 1 schematically shows an example OoC situation in a location system with one cell, wherein in-coverage tags 101, 102, 103 and out-of-coverage tags 111, 112, 113 all represented by small circles are to be located in a 2D plane within an X/Y coordinate system. As therein illustrated, the tags 101, 102, 103, 111, 112, 113 represented by small empty circles can transmit RF signals, which can be received at anchor nodes 121, 122, 123, 124 represented by large circles. The tags 111, 112, 113 represented by small filled circles are OoC and cannot transmit to, nor receive from, the anchor nodes 121, 122, 123, 124 represented by large circles, but can transmit to, and also receive from, as represented by the two-way arrows, nearby tags 101, 102, 103 represented by small empty circles.

In 3GPP specifications, the concept of UE-to-Network Relay (U2N Relay UE) has been introduced to enable OoC/LiC UEs to still contact the network infrastructure via a relay. However, this is not feasible for low-power tags because of the high resource demands of acting as L2 or L3 U2N Relay UE as well as L2 or L3 U2N Remote UE.

There may thus be a need for tag-to-tag transmission and measurements, as opposed to only tag-to-infrastructure transmissions. However, in the case of low-power tags, because of their very low energy consumption, need to harvest energy, and/or long (battery) lifetime requirements, the transmissions by tags and/or measurements by tags cannot be executed continuously and radio reception (Rx) on a tag cannot be 100% of the time.

Privacy of tag identity and of its location information

For privacy reasons, tag identity shall not be disclosed to other tags and/or anchors. It is also preferable for it to be not disclosed to the individual infrastructure nodes (such as gNBs) because only an authorized and well-protected location service residing in the core network, the cloud, or elsewhere on the Internet, should be able to perform the position estimates of the tags to then share this data with the relevant authorized stakeholders and/or services. This is especially important for a standardized solution in which tags of multiple vendors and owners must cooperate with infrastructure from multiple operators to achieve a common goal of localization of tags.

Also, any location information or fragments thereof on tags should preferably not be disclosed to other tags and/or anchor nodes. For example, an indication of a Tx power used by a transmitting tag in a transmitted message should preferably not be readable to receiving entities or nodes. Also, any reusable identifier (even if it is a temporary one) should preferably be concealed such that a location-tracing attack on a tag becomes very hard to execute.

A known solution for privacy and confidentiality is to encrypt the information reported by every tag. Receiving entities (e.g., anchors and/or tags) keep this information in its encrypted form and the information data is reported to an authorized location service in the network, which is the only authorized actor that can decrypt the information based on key material that is associated to the identity of each reporting entity. Another known solution from contact-tracing systems is to send a random code which can at a later time, using a database at a secure location, be linked to a particular entity or node being present close to another entity at a particular time. However, these known solutions raise the issue of how the location service can know which decryption key to use if many millions of different tags are reporting data, knowing that the identity of the reporting tag should not be included for above privacy reasons.

SUMMARY OF THE INVENTION

It is an object of the present invention to overcome at least some of the above problems.

This object is achieved by a communication device as claimed in claim 1, by a method as claimed in claim 14, by a system as claimed in claim 15, and by a computer program product

According to a first aspect, a communication device (e.g., a mobile, or stationary, or intermittently mobile and stationary, UE or tag) in a wireless network, wherein a feature (e.g., location, identity, device type, a sensed value, and so on) of the communication device is to be determined, is provided. The communication device as a node may be adapted to:

generate a first secure report message;
receive configuration information from a base station device, directly if the communication device is in coverage of the base station device; and
transmit the first secure report message,
wherein the configuration information includes at least information about at least a time window during which the communication device is adapted to transmit the first secure report message to the base station device and/or to another node and receive a secure report message from the other node, and/or frequency resources that the communication device is adapted to use to transmit the first secure report message to the base station device and/or to another node and receive a secure report message from the other node.

It is noted that the communication device as a node may be a tag, which may be read to obtain a feature of the tag. This feature may include an identity of the tag. By knowing to which base station the identity of the tag is delivered, then it may be possible to infer the (rough) location of the tag. The feature may also include a device type referring to the type of device it is or referring to the type of device/product it is attached to. In the case where the communication device as a node is a tag, the secure report message of the node or another node may comprise (or may itself be) a secure tag report message.

According to a second aspect, a method of determining a feature (e.g., location, identity, device type, and so on) of a communication device as a node in a wireless network is provided, wherein the method may comprise:

generating a first secure report message;
receiving configuration information from a base station device, directly if the communication device is in coverage of the base station device; and
transmitting the first secure report message,
wherein the configuration information includes at least information about at least a time window during which the communication device is adapted to transmit the first secure report message to the base station device and/or to another node and receive a secure report message from the other node, and/or frequency resources that the communication device is adapted to use to transmit the first secure report message to the base station device and/or to another node and receive a secure report message from the other node.

According to a third aspect, a system is provided, which may comprise, in a wireless network, at least a plurality of the communication devices of the first aspect, a plurality of base station devices, and a core network location service adapted to determine a location estimate of a target communication device among the plurality of communication devices.

Finally, according to a fourth aspect, a computer program product is provided, which may comprise code means for producing the steps of the method according to the second aspect when run on a computer device.

According to a first option which may be combined with any of the above first to fourth aspects, the transmission of the first secure report message may be performed at a time window and/or using frequency resources that depend on an identifier.

According to a second option which may be combined with the first option and/or any of the above first to fourth aspects, the communication device may be adapted to:

receive the secure report message as a second secure report message from one or more other nodes;

in response to receipt of at least some second secure report messages, generate a respective observation report associated with the receipt of the at least some second secure report messages; and

selectively embed the observation reports in the first secure report message.

According to a third option which may be combined with the first or second option and/or any of the above first to fourth aspects, the communication device may be adapted to:

receive a timing reference from a synchronization signal when the communication device is in coverage of a synchronization source; and

infer a timing reference from the receipt of at least one second secure report message from at least one nearby node among the one or more other nodes when the communication device is not in coverage of a synchronization source.

According to a fourth option which may be combined with the first to third options and/or any of the above first to fourth aspects, the communication device may be adapted to:

embed the received configuration information as a configuration data field in the first secure report message.

According to a fifth option which may be combined with the first to fourth options and/or any of the above first to fourth aspects, the configuration data field may comprise at least a predefined target number type to control and/or influence and/or constrain a size of the first secure report message.

According to a sixth option which may be combined with any of the first to fifth options and/or any of the above first to fourth aspects, the communication device may be adapted to:

control its transmission power for transmitting the first secure report message, by using a predefined transmission control policy that is determined based on the received configuration information.

According to a seventh option which may be combined with any of the first to sixth options and/or any of the above first to fourth aspects, the first secure report message may comprise at least a secure section data field being an output of a cryptographic function over a plurality of data items.

According to an eighth option which may be combined with any of the first to seventh options and/or any of the above first to fourth aspects, the plurality of data items of the secure section data field may comprise at least a temporary identifier of the communication device.

According to a ninth option which may be combined with any of the first to eighth options and/or any of the above first to fourth aspects, the communication device may be adapted to:

embed a payload in the first secure report message; and

transmit the first secure report message containing the embedded payload, the payload being an output of a cryptographic function locally computed.

According to a tenth option which may be combined with any of the first to ninth options and/or any of the above first to fourth aspects, selectively embedding the observation reports in the first secure report message may comprise:

selecting observation reports among the observation reports that have been previously transmitted a number of times equal to or greater than a predefined threshold; and/or

selecting the older observation reports among the observation reports; and/or

selecting observation reports among the observation reports that have no indication that the selected observation reports have been transmitted by a node in coverage of the base station device,

and

preventing the selected observation reports from being embedded in the first secure report message to be not transmitted, during the time window, as part of the first secure report message, while transmitting the non-selected observation reports among the observation reports.

According to an eleventh option which may be combined with any of the first to tenth options and/or any of the above first to fourth aspects, the communication device may be adapted to:
automatically extend the time window itself if no time slot within the time window and on a transmission frequency channel of the frequency resources is free, or if a percentage of occupied time slots within the time window is above a predefined threshold.

According to a twelfth option which may be combined with any of the first to eleventh options and/or any of the above first to fourth aspects, the communication device may be adapted to:

receive another configuration information from another base station device if the communication device is located on a cell boundary separating a cell in coverage of the base station device and another cell in coverage of the other base station device, the other configuration information including at least information about another time window during which the communication device is adapted to transmit and receive and about other frequency resources that the communication device is adapted to use to transmit and receive; and
conditionally transmit during both the time window and the other time window.

According to a thirteenth option which may be combined with any of the first to twelfth options and/or any of the above first to fourth aspects, the core network location service may be adapted to receive a secure report message sent as an unicast message from a communication device of the plurality of communication devices, or to receive a variation of the secure report message directly from a base station device of the plurality of base station devices if the base station device receives the secure report message from the communication device in coverage of the base station device, the variation of the secure report message corresponding to the secure report message or at least one secure element thereof embedded within an observation report generated by the base station device.

According to a fourteenth option which may be combined with any of the first to thirteenth options and/or any of the above first to fourth aspects, the core network location service may be adapted to perform cryptographic function computations by:

using the secure section data field as input for each received secure report message; and/or
using some inputs and comparing an output of the cryptographic function to the secure section data field,
and in response, identifying a true identity of the target communication device.

It is noted that the above apparatuses may be implemented based on discrete hardware circuitries with discrete hardware components, integrated chips, or arrangements of chip modules, or based on signal processing devices or chips controlled by software routines or programs stored in memories, written on a computer readable media, or downloaded from a network, such as the Internet.

It shall be understood that the communication device of claim 1, the method of claim 14, the system of claim 15, and the corresponding computer program product may have similar and/or identical preferred embodiments, in particular, as defined in the dependent claims.

It shall be understood that a preferred embodiment of the invention can also be any combination of the dependent claims or above embodiments with the respective independent claim.

These and other aspects of the invention will be apparent from and elucidated with reference to the embodiments described hereinafter.

BRIEF DESCRIPTION OF THE DRAWINGS

In the following drawings:

Fig. 1 schematically shows an example OoC situation in a location system with a distribution of in-coverage and out-of-coverage tags and anchor nodes through one cell in a 2D plane;
Fig. 2 schematically shows an example situation in a location system with one cell, according to an embodiment of the present invention;
Fig. 3 schematically shows a basic cellular location and communication system architecture, according to an embodiment of the present invention;
Fig. 4 schematically shows an example extension of the basic cellular location and communication system architecture of figure 3, according to an embodiment of the present invention;
Fig. 5 schematically shows an example deployment of a location system based on the system architecture of figure 4 with a distribution of in-coverage and out-of-coverage tags, anchor nodes, and SL-UEs through one cell in a 2D plane, according to an embodiment of the present invention;
Fig. 6 schematically shows an example private configuration by a gNB of a Tx time window for a tag, according to an embodiment of the present invention;

Fig. 7 schematically shows an example OoC situation in a location system with a distribution of in-coverage and out-of-coverage tags and anchor nodes through two cells in a 2D plane;

Fig. 8 schematically shows a signaling and processing diagram for a communication process between access device and tag, according to an embodiment of the present invention;

Fig. 9 schematically shows a signaling and processing diagram between access device and tag involving an authentication procedure between the network and the tag, according to an embodiment of the present invention;

Fig. 10 schematically shows a signaling and processing diagram between access device and tag wherein a tag in coverage rebroadcasts a request from the access device, according to an embodiment of the present invention; and

Fig. 11 schematically shows an example to allocate timing and frequency resources for the reply from the tags based on identity values, according to an embodiment of the present invention.

DETAILED DESCRIPTION OF EMBODIMENTS

Tags may be used to enable multiple use cases such as asset tracking or identification of assets. A tag may be attached to an asset, and an identity provided by the tag and received by a reader may allow to determine a feature of the asset including, e.g., at least one of an identity of the asset, a type of the asset, a location of the asset, and a sensed value if the tag comprises, e.g., a small sensor adapted to sense values.

The following embodiments of the present invention are described based, in particular, on location (also interchangeably designated as "localization" or "positioning") services for cellular networks, where, e.g., 4G network elements may be incorporated in proposed 5G solutions. Furthermore, at least some of the below embodiments are described based on a 5G New Radio (5G NR) radio access technology.

Throughout the present disclosure, the term "wireless network" is intended to mean a whole network system (e.g., 4G or 5G system) including at least communication devices (e.g., UEs), radio access network (RAN) and core network (CN). Furthermore, the abbreviations "eNB" (4G terminology) and "gNB" (5G terminology) are intended to mean access device such as a cellular base station or a WiFi access point. The eNB/gNB is part of the RAN, which provides an interface to any functions in the CN. The RAN is part of a wireless communication network. It implements a radio access technology (RAT). Conceptually, it resides between a communication device such as a mobile phone, a computer, or any remotely controlled machine, and provides connection with its CN. The CN is the communication network's core part, which offers numerous services to customers who are interconnected via the RAN. More specifically, it directs communication streams over the communication network and possibly other networks. In the 3GPP specifications TS 23.303, 23.304, 24.334 and 24.554 for 4G and 5G networks, respectively, so-called proximity service (ProSe) functions are defined to enable *inter alia* connectivity for cellular communication devices (e.g., UEs) that are temporarily not in coverage of an access device (e.g., eNB, gNB). This particular function is called ProSe UE-to-network relay, or Relay UE. The Relay UE is a communication device that helps another out-of-coverage (OoC) UE communicate to the access device (e.g., eNB, gNB) by relaying application and network data traffic in two directions between the OoC UE and the access device (e.g., eNB, gNB). The local communication between the Relay UE and the OoC-UE is called D2D communication or sidelink communication or PC5 communication. The abbreviation "PC5" designates an interface for sidelink communication as defined by 3GPP for ProSe. Furthermore, the abbreviation "UL" is used for the uplink direction from the communication device (e.g., UE) to the access device (e.g., eNB, gNB), the abbreviation "DL" for the downlink direction from the access device (e.g., eNB, gNB) to the communication device (e.g., UE), and the abbreviation "SL" for sidelink communication between two or more communication devices (e.g., UEs).

Once a relaying relation is established, the OoC-UE is connected via the Relay UE and acts in a role of "Remote UE". This situation means that the Remote UE has an indirect network connection to the CN as opposed to a direct network connection that is the normal case (cf., e.g., 3GPP specification TS 22.261 v16.10.0).

Furthermore, 3GPP specifications TR 23.733 v15.1.0 and TR 36.746 v15.1.1 can, for example, provide studies on architectural enhancements, e.g., to enable an internet-of-things (IoT) device (in a role of Remote UE) to operate on very low power by using a Relay UE to connect to the wider network. Because the Relay UE is physically very close, it can be reached using very low power transmissions. This work also includes security, speed and stability improvements to ProSe. These extensions of ProSe are called enhanced ProSe ("eProSe").

ProSe can also be used for direct communication between two UEs. Additional radio level details on ProSe, V2X and sidelink communication can be found in, e.g., 3GPP specifications TR 37.985, TS 38.300, and TR 38.836.

Location systems in cellular networks

Embodiments of the present invention are in particular directed to determination of location of wireless devices in a cellular network, while using very little electrical energy on the wireless devices and a very simple radio. These properties allow for small, low-cost devices such as user equipment devices (UEs) in a cellular system, either battery-powered or battery-less. The battery-less devices may harvest electrical energy from the environment, e.g., from sunlight, motion, vibration, or RF signals. In the present disclosure, these devices are called "tags" and may be considered as a specific class of UEs. It is noted that the wireless devices may be mobile, or stationary, or intermittently mobile and stationary.

In a location system, multiple types of devices may participate to provide the localization functionality. These types of devices may include tags, mobile UEs more powerful than the tags (e.g., smartphones or V2X-connected vehicles), or infrastructure devices (e.g., gNBs, mobile gNBs, or V2X roadside units). In the present disclosure, the term "node" may be used for such a participating device such that a node may be a UE and a tag may also be a node.

Some nodes may act as "anchor nodes" or "anchors" in short. These are devices participating in a localization system that have a 2D or 3D position that is already known to the system with some degree of accuracy, for example because these participating devices are never moving (e.g., fixed infrastructure nodes), or because a cellular positioning technology is used that enables the cellular network to determine the position of a UE, or because these participating devices can use a global navigation satellite system (GNSS), e.g., a global positioning system (GPS), to determine their position with high accuracy.

Some location solutions let a node use only measurements to anchor nodes to determine the position of the node. Other location solutions let a node also interact with other, non-anchor nodes to determine its position. The latter is sometimes called "cooperative localization" or "peer-to-peer localization".

For the purpose of the present disclosure, the following three main categories of wireless localization/positioning solutions may be considered:

1. "range-based" category: nodes measure mutual range and/or distance to peer nodes. From multiple range measurements and some known anchor positions, 2D or 3D location can then be calculated:

   a. these measurements involve a technology like RF and/or acoustic time-of-flight measurements in order to measure a distance;
   b. RF time-of-flight measurement typically requires a high-bandwidth RF signal and very accurate (and also expensive) clocks on participating nodes;

2. "range-free" category: nodes do not measure range to but only presence of peer nodes, optionally with some signal-strength indication:

   a. from multiple presence measurements (optionally from signal-strength measurements too) and some known anchor positions, 2D or 3D location can be estimated. The estimation may consist of a single position outcome (i.e., the "most likely position") or it may consist of a probabilistic model (i.e., multiple location areas tagged with a likelihood of the node being present there);
   b. typically, range-free category implies a lower energy consumption and a lower cost for the nodes, but also a lower accuracy, with respect to the "range-based" category;

3. Other category including: angle of arrival/departure (AoA/AoD), hybrids, simultaneous localization and mapping (SLAM).

The embodiments of the present disclosure may be directed to the "range-free" category to achieve lowest energy usage/complexity for tags, while attempting to compensate for the lower accuracy of using presence and optionally signal-strength measurements compared to the "range-based" category.

Location solutions may also be broadly classified into the two categories of real-time and non-real-time. In real-time location systems, the location measurements/estimates are made available in real-time to an application, within a particular guaranteed maximum time delay. This may be several milliseconds for some applications, while it may be seconds or even minutes for other types of applications. For non-real-time location systems, there are no such stringent requirements; the focus is more on collecting a reliable and trustworthy record of past locations of devices/tags/entities even if that implies some unpredictable delays in some cases (e.g., data required to adequately estimate a position of a tag may come in hours or even days after the tag was located on that position). To achieve this reliable record, associating measurements reliably to timestamps is of key importance. A location service for a non-real-time system should be able to establish the integrity/trustworthiness of a location estimate of a tag over time, by correlating multiple measurements of signals of that tag over a time period to form a plausible hypothesis of the tag's movement (if any) during that period. This may include executing procedures such as processing a (delayed) tag-sighting related to a tag that was taken at some time in the past and retroactively adjusting a location estimate for that tag for times in the past, e.g., adjusting a trajectory hypothesis over time of a moving tag based on the new evidence. Such procedures of updating past information are typically not done for real-time systems.

For the present invention, both categories of systems are targeted, although for real-time applications, the most demanding applications (e.g., position determination latency in the order of milliseconds up to 1 second for > 99.9% of measurements), typically other dedicated tracking solutions, would be more suitable. Some embodiments provide specific elements that are most applicable to non-real-time location systems, such as the element of configuring a long tag-report reporting periodicity (e.g., several hours or days), or the elements of out-of-coverage (OoC) operation of tags, or the inclusion of tag-sightings within tag-reports to be sent during a next time window (which may be several minutes or hours later than the time of the tag-sighting).

These wireless localization solutions make use of RF messages transmitted by a node, which can be received and logged by nearby nodes. In the present disclosure, such a RF message is called a "tag-report" or, interchangeably, a "tag-report message", and an event of receiving a tag-report and associated metadata for this event is called specifically a "tag-sighting" or in a more generic way "an observation report".

### Time synchronization

To minimize energy consumption, the transmission may need to be intermittent, e.g., every few seconds in a use case against every N minutes, hours, or even days in other use cases. In a scenario in which tags would only interact directly with infrastructure and/or more powerful anchor nodes (such as V2X UEs installed in vehicles), then there would be no need to synchronize the operation of multiple tags in time. But to reach a good quality of location estimates also in situations of low coverage of anchor nodes (including aforementioned situations with OoC/LiC tags), using tag-to-tag measurements is however required.

Thus, if tags, which may have long to very long sleep times during which their radio transceiver is turned off, need to perform peer-to-peer (i.e., tag-to-tag) data transmissions and reception (see the two-way arrows connecting the small circles in figure 1) for the purpose of localization, then the operation of all involved tags needs to be synchronized in time such that, during a short time window, all tags are listening (Rx) to tag transmissions and also all tags get an opportunity to transmit (Tx) their own data; all this with the purpose of enabling the infrastructure or network to determine tag positions based on observed measurements of tag data transmissions. It would be ideal if the infrastructure nodes and/or all anchor nodes could ensure that up-to-date configuration information with time schedule(s) is distributed to all tags, e.g. through broadcast. However, this may not work for OoC/LiC tags.

Furthermore, mutual interference may occur if many tags become active during the same narrow time window. It is why the time window needs to be as short as possible to conserve energy in tags, while being long enough to enable all tags to transmit without interfering too much. This assumes that all tags in an area, or a group of tags in an area which is a subset of the total set of tags, are using the same RF frequency band or channel for transmission with the risk of potential interference. In cellular systems, scheduling is usually used to minimize the interference. However, in the case of OoC/LiC tags that cannot easily achieve time synchronization with the gNBs of the cellular network, this scheduling becomes challenging. Indeed, keeping an accurate clock is energy-consuming and keeping a less accurate clock on a tag conserves energy during the long sleep times of a tag. Thus, even if such OoC/LiC tags transmit according to a preconfigured schedule, their timing and frequency resource(s) may overlap with that of peer tags, thereby causing interference, or they may miss the assigned time window completely if their respective clock is too inaccurate and/or the time window is short.

### Contact-tracing systems and privacy preservation

From contact-tracing systems based on wireless signals (e.g., Bluetooth), it is known that proximity to a person of particular class (e.g., infected person) carrying a wireless device can be detected *a posteriori,* without disclosing any identity information about this person or about his/her wireless device. This can be done by sending unique random codes to receiving devices, which log the received codes for later comparison in a network database. This is also done without disclosing any location information of the persons and/or devices involved.

It is noted that preserving privacy like in contact-tracing systems is also important for a location system: no tags, even nearby, should be able to learn about the identity or the location of anothertag, unless this information disclosure is explicitly intended. In most use cases, the authority to collect the data on estimated locations is with an entity residing in the network infrastructure, not a tag. Thus, other tags, e.g., nearby tags, usually must not be able to learn about any location or identity information of a given tag. But in many use cases, a tag learning about its own location is useful and/or acceptable; in this case, the tag may disclose the information only when needed and to parties authorized to process the information.

### Trustworthiness of location information and replay attacks

Some existing approaches like iBeacon have the problem that tag-reports can be recorded and replayed, thereby spoofing the presence of a particular iBeacon without means to validate the authenticity of the tag-report.

But even when location information and/or identity information in a tag-report is/are encrypted and protected (tamper-proof), it may still be possible to launch attacks of record-and-replay type by a malicious entity that is able to obtain previously recorded transmissions of a tag that were done at one location or multiple locations. This entity could claim to have received a tag-report by a tag which has in fact never transmitted this tag-report to it, but it was transmitted at another time and/or location, where the malicious entity might not have been present even. The malicious entity may be acting as an anchor node in the location system. If one "good" tag-report and one "malicious" tag-report is thus reported to the infrastructure, it can then be difficult for the location service in the infrastructure to adjudicate between who has the right report or whether both are right, or both are wrong.

Optimal control of transmit (Tx) power

For tags, lowering their average Tx power for transmissions and also employing a radio design with low peak Tx power is beneficial for low energy consumption and long (battery) lifetime of the tag. However, a low Tx power presents the disadvantage to reduce the potential number of tag measurements that can be obtained by nearby tags, by anchor nodes, and/or by infrastructure-devices, due to reduced radio transmission range. In a scenario in which none of the nearby receivers hears the transmission of a tag, this transmission would then be rendered useless and wasteful. In another scenario in which a tag can transmit at maximum (100%) Tx power, this could lead to a maximum number of tag observations (that is, successful receptions of that tag's data transmission) in other devices but could also lead to potential waste of energy on the tag, whereas the same effect might have been achieved at, for example, 50% Tx power.

A solution might be to automatically regulate the Tx power used per tag to an optimized situation. However, such Tx power regulation per tag might potentially lead to much overhead data traffic in the case where it is under control or execution of a location service on the core network (CN) in real-time.

Efficient and scalable operation

For tags, having an energy-efficient operation is fundamental. This means that a request to read a tag should be done in an efficient manner. Efficiency can refer to, e.g., energy-efficiency, i.e., with low energy cost or time-efficient, i.e., fast. Scalable can refer to the number of tags that can be read simultaneously.

5G systems exhibit an efficient and scalable operation regarding how devices access the network or how many devices can simultaneously access the network, but even such efficient procedures might be too demanding for tags.

Location systems based on RF signal-strength and presence measurements

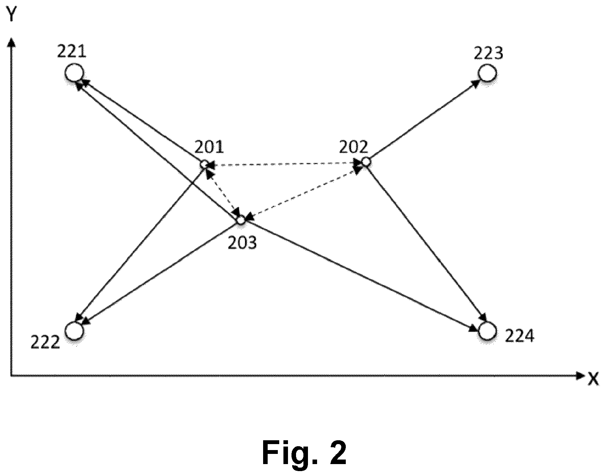

Figure 2 schematically shows an example situation in a location system with one cell according to an example embodiment of the present invention, wherein in-coverage tags 201, 202, 203 (in tag-to-tag transmission as depicted by the dashed two-way arrows) represented by small empty circles are to be located in a 2D plane within an X/Y coordinate system. Location determination can be made thanks to RF signals sent out (cf. arrows) by the in-coverage tags 201, 202, 203 to anchor nodes 221, 222, 223, 224 represented by large circles and being part of a network infrastructure of the cellular network, and by the corresponding RF signal measurements performed by the anchor nodes 221, 222, 223, 224 and by the tags 201, 202, 203. Typically, the RF signal strength of the received signals by the anchor nodes 221, 222, 223, 224 and by the tags 201, 202, 203 may be used to help to estimate the tag positions: the weaker the signal strength, the farther away the tag on average. It is known that in such systems, the more anchor nodes are present, the better the position estimation accuracy usually becomes. It is also known that if multiple RF signal strength measurements are taken over time and input to a time-based estimation model for the position of a single tag, the accuracy can be improved. This time-based estimation model may be based *inter alia* on Kalman filtering, multiple-hypotheses Kalman filtering, particle filters, neural networks, hybrids, and so on. Although not shown, it is also known that a similar location system could be sketched by reversing Tx and Rx directions or by performing measurements in both Tx and Rx directions (two-way arrows).

As above-defined, the measurement and logging of an RF signal as a tag-report transmitted by a particular tag may correspond to a tag-sighting. An infrastructure device (e.g., an anchor node like gNB), another type of anchor node, or a tag, might be the source of tag-sightings. In existing systems, the receiver of the tag-report can typically infer an identity of the sending tag from the tag-report data, and this is however a problem for many use cases involving collaborating devices from multiple owners as above-mentioned in the background section.

It is noted that the "multiple measurements" strategy, i.e., the strategy of doing continuously repeated transmissions and/or measurements by a tag over time with a short sleep time has the known disadvantage of increasing energy consumption linearly with the number of transmissions and/or measurements. Thus, this strategy may be infeasible for a very low-power tag location system, and may rather be applicable for devices (tags) that are regularly charged (e.g., mobile robots or phones) during particular sessions limited in time (thus not 24/7 for weeks, months, years, and so on).

## iBeacons, Bluetooth beacons and other beacon systems

There exist various types of beacon-based location systems such as Apple's iBeacon (iBeacon) based on Bluetooth low energy (BLE). These location systems fall under the above-mentioned category of location systems based on RF signal-strength and presence measurements. In the case of iBeacon, the tag-report can contain the unique ID of the tag, and BLE-enabled smart devices in the area can receive these tag-reports and then report the unique ID of the tag to a location service along with the estimated location (as determined by the receiving device in some other way, e.g., known GPS/Wi-Fi hybrid location systems).

It is also known that (BLE) beacons can be configured to transmit their location coordinates, either from a dedicated coordinate system (e.g., for a museum app) or a from generic coordinate system (e.g., GPS coordinates). Thus, a device can infer its own location from seeing one or more tag-reports from beacons with particular coordinate information, together with estimated distance to each of the beacons.

## Terminology Definitions

For convenience reasons, some terms widely used throughout the present disclosure have been gathered in the following non-exhaustive list of definitions:

- Node: any device with RF transmit and/or receive capabilities that participates in the location system to determine the tag location. Thus, e.g., a core network location service or a web server on the Internet are not considered nodes according to the present definition of a node.
- Tag: device (e.g., UE) with optional sensor capabilities whose location is to be determined. The tag may be mobile, stationary, or intermittently mobile and stationary.
- Infrastructure node: a typically stationary node (e.g., gNB) that is part of a cellular network infrastructure.
- Anchor node: either a communication device (e.g., UE), or an infrastructure node (e.g., gNB) with a fixed position or otherwise a known position (e.g., accurately determined by GPS) which helps to determine the tag location.
- Tag-report: an RF message transmitted by a tag for the purpose to help to determine a tag location. Optionally, the message may contain sensor data and/or status information about the tag.
- Tag-sighting: the reception of a tag-report (or tag-report message) that was sent by a tag, and metadata (e.g., (local) time of reception, received signal strength of the tag-report message, received signal quality, or identity of the receiver, and so on) associated with this reception event. The term "observation report" whenever found in the present disclosure will be used to designate the specific term "tag-sighting" in a more generic way.
- SL-UE / Sidelink UE: a sidelink transmission/reception capable UE that may receive tag-reports, and may send its tag-sightings to a reporting-destination entity (e.g., gNB of the RAN, or location service of the CN). The SL-UE may also act as an anchor. It may also act as a synchronization source to nearby tags, by transmitting sidelink synchronization signals.
- gNB: wireless access device (e.g., a base station) of a cellular network.
- Location service (e.g., location management function (LMF)): a network function of the CN (which is usually the case although the network function may also be outside the CN in a particular embodiment) that receives information (e.g., tag-sightings), and based on all information and its internal location model can estimate the locations of tags. It provides tag locations to authorized applications as a service.
- OoC: Out-of-Coverage of a cellular network (e.g., out of the range of a suitable gNB), and/or out of range of an anchor node (e.g., gNB or UE) associated to a suitable cellular network. This definition may, for example, cover the following OoC situations:

     1. out of gNB coverage, but still in range of one or more anchor nodes;
     2. out of gNB coverage and out of range of any anchor nodes;
     3. out of gNB coverage and out of range of any other nodes.

## System architecture

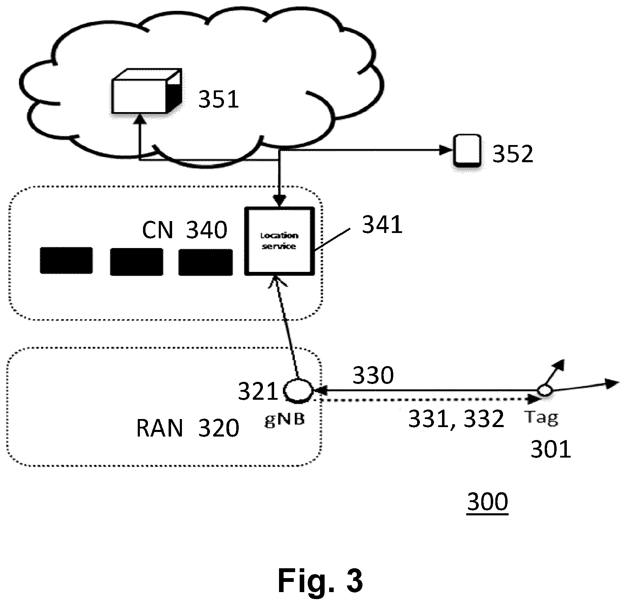

Figure 3 schematically shows a basic cellular location and communication system architecture 300 according to an example embodiment of the present invention. A single tag 301 instead of multiple tags is herein depicted only for representation simplicity reasons. The anchor node 321 of the RAN 320 is a 5G-NR base station, gNB 321, which is represented by a large circle. The single tag 301 in gNB-coverage is represented by a small empty circle and sends a periodic tag-report message 330 that may be received by multiple nodes (as illustrated by multiple arrows from the tag) in the vicinity. The 5G-NR base station, gNB 321, as a node in the vicinity receives the tag-report message 330 and reports its own tag-sighting to the location service 341 of the CN 340. The CN 340 may be, e.g., a 5G core network. The CN 340 can include a number of network functions including *inter alia,* but not limited to, a location management function (LMF) configured to manage positioning/location service offered to the UEs (e.g., tags) or offered to other entities. It is noted that the location service 341 of figure 3 may be a separate service that only collects the reports and then further sends data in another form to the LMF or may otherwise be this LMF. There may be multiple authorized clients 351, 352 (including potential clients in cloud 351 and potential clients on UEs 352) that are allowed to use location information as calculated by the location service 441, for particular tags, e.g., only tags owned by that user. It is noted that a tag itself (i.e., the same tag for which location is calculated or another tag that has a legitimate interest in that location information) may be one of the potential clients on UEs 352. The tag location is determined based on its proximity to one or more gNBs that reside at known locations, in case the tag is in coverage of those gNBs. It is noted that, in the present example embodiment, a single gNB 321 instead of multiple gNBs is depicted only for simplicity reasons. The gNB 321 sends synchronization signals 331 (sync signals) and configuration data 332 to the tag 301, which synchronizes to the sync signals 331 and selects a time window based on the configuration data during which to send its tag-report messages 330 and receive tag-report messages 330 from other tags 301.

In an example embodiment, the tag-report messages 330 may be sent to the gNB 321 using one or both of following methods:

1. 5G NR sidelink (SL) discovery messages;
2. 5G NR uplink (UL) communication,

depending on configuration and conditions. In an example, if the tag sees multiple gNBs nearby, then it can switch to a mode in which it only reports via UL communication to these multiple gNBs. In another example, if the tag sees one or more gNBs nearby, then it can send the discovery messages plus tag-report messages via UL communication to that gNB, e.g., for extra reliability, confirmation, and/or security as proof of presence. In another example, if the tag sees no gNB nearby, then it can only use SL discovery messages.

It is noted that the first method (1.) is expected to be most lightweight and to conserve energy best for the tag, with respect to the second method (2.).

It is noted that the example embodiment of the basic system architecture 300 of figure 3 illustrates how this embodiment may be integrated into an overall (5G) communication system. It re-uses and also extends the existing communication and signalling formats of 3GPP new radio (NR) sidelink discovery messages. For example, the new parts needed to extend the 5G NR standard and implement the embodiment of the present invention may comprise in a non-exhaustive list the following extensions:

- standardized tag-report data format within SL discovery message, such that all nodes (e.g., tags, UEs, or gNBs) can understand and use the same format;

  • it may include a standardized secure-data-section;

- standardized format for configuration data (as determined by gNB/RAN and encoded within a tag-report message);
- within tag: standard time window calculation algorithm;
- within tag: standard tag-sighting selection method (used for selective inclusion of tag-sightings within a transmitted tag-report);
- between tag and location service/CN: an interface to retrieve the temporary identity (i.e., tag-temp-id) of a tag, or its set of tag-temp-ids in case of multiple.

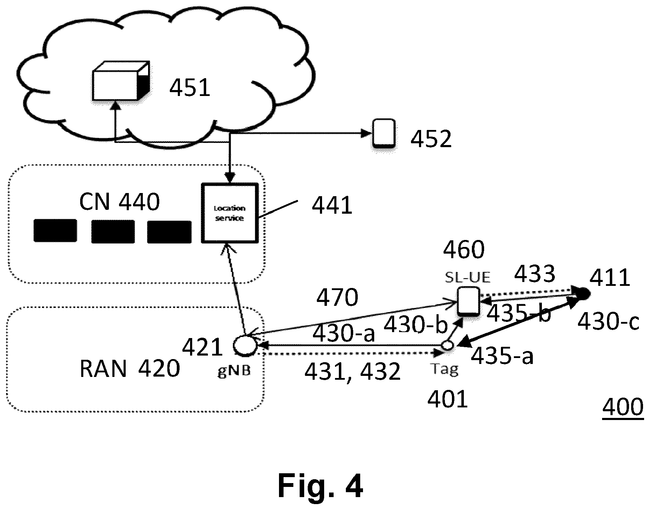

As schematically shown in the system architecture 400 of figure 4, the system architecture 300 of figure 3 may be extended with sidelink-capable UEs (SL-UEs) 460 that are in the area of coverage of a gNB 421 and cooperate in performing the location determination of tags, and an additional tag 411 that is represented by a small full circle and is out-of-coverage (OoC) of the gNB 421. The SL-UE 460 also receives the tag-report messages 430-b, 435-b of any nearby in-range tags, so the SL-UE 460 acts as an additional tag-report collecting node. After receiving the tag-report messages 430-b, 435-b, it reports the corresponding tag-sightings that it creates based on the tag-report messages 430-b, 435-b to a reporting-destination entity (e.g., to the location service 441 directly (via the gNB 421 which transparently transports the reported data to the location service 441), or to its serving gNB 421 directly, where the gNB may process the data or may report it later in another form to the location service 441) over a Uu uplink (UL) connection 470. These tag-sightings are typically only useful if location information of the SL-UE 460 is known. This location information may be an approximate location estimated by one or more gNB(s) based on the SL-UE signals 470, or it may be a purposefully executed location determination procedure for the SL-UE 460 using one of the known methods in 3GPP (e.g., a method making use of LPP protocol). Thus, the tag-sightings sent by the SL-UE 460 may contain the SL-UE's own location estimate, or the tag-sightings may be later augmented (e.g., at the gNB 421 or at the location service 441) with SL-UE position information. In a similar manner, the tag-sightings may contain information about the direction of the received corresponding tag-report signal (as sent by the tag) in the case where a signal direction estimation based on, for example, multielement antennas is available on the SL-UE 460.

As shown in figure 4, the SL-UE 460 may provide sidelink synchronization signals (SL sync signals) 433 to the OoC tag 411, which may help the OoC tag 411 (small filled circle) to be able to transmit on the right time instants and frequencies without interfering with other data traffic. As can be seen, the same tag-report message 430 sent by the tag 401 may be received by different collecting nodes, which is represented by tag-report reception event arrows 430-a, 430-b, 430-c: the neighboring tag (i.e., the OoC tag) 411 in the present embodiment for the tag-report message reception 430-c, the SL-UE 460 for the tag-report message reception 430-b, and the gNB 421 at the RAN infrastructure 420 for the tag-report message reception 430-a. In particular cases (e.g., depending on RF signal propagation conditions such as, e.g., interference), it may happen that a transmitted tag-report message 430 is not received by all of the nodes as indicated above. For example, if a tag 401 transmits three different tag-report messages, then it may be that each message is only received by one of the nearby nodes, for example, by the respective gNB 421, SL-UE 460, and neighboring tag 411.

Although not herein depicted for simplicity reasons, it is noted that the SL-UE 460 may also be connected to multiple gNB(s) and that there may be multiple SL-UEs in the coverage area that are also able to provide the synchronization signals.

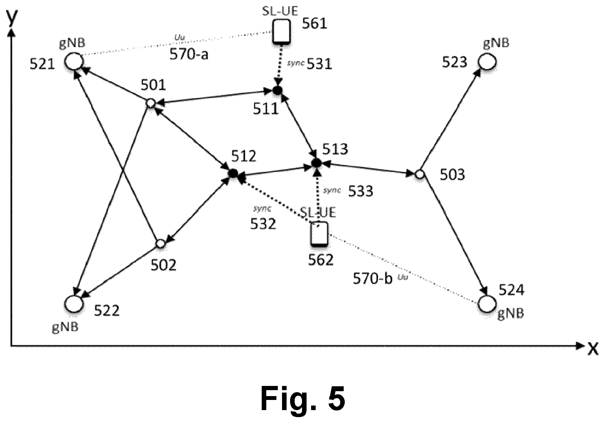

In an example embodiment of the present invention, figure 5 schematically shows an example deployment of a location system based on the system architecture 400 of figure 4. The deployment in a 2D plane within an X/Y coordinate system shows anchor nodes that are 5G NR base stations, e.g., gNBs 521, 522, 523, 524 (as represented by large circles), SL-UEs 561, 562 (as represented by rectangles) that are UEs more powerful than the tags and are passing by in the coverage area, OoC tags 511, 512, 513 (as represented by small filled circles), and in-coverage tags 501, 502, 503 (represented by small empty circles). The SL-UEs 561, 562 and the tags 501, 502, 503, 511, 512, 513 are capable of NR sidelink communication and also of sending/receiving sidelink discovery messages per 3GPP TS 38.300 (Release 16). Unlike the tags 501, 502, 503, 511, 512, 513, the SL-UEs 561, 562 may also implement the sidelink synchronization signals transmission per 3GPP TS 38.331 (Release 16); 3GPP TS 38.300 (Release 16), 3GPP TS 38.211 (Release 16), and 3GPP TS 38.213 (Release 16). Thus, the SL-UEs 561, 562 can act as SyncRef UEs. As depicted by arrows, the in-coverage tags 501, 502, 503 can send tag-report messages to multiple gNBs 521, 522, 523, 524. Although not shown, it is noted that the tags 501, 502, 503, 511, 512, 513 because they are in gNB-coverage can also send tag-sightings directly in secure unicast to the gNBs 521, 522, 523, 524. As depicted by arrows, a tag-report message can be sent from a tag (e.g., 501) and received by a peer tag (e.g., 511). Based on receiving the tag-report, the peer tag creates a tag-sighting by combining information from the received tag-report with particular metadata describing the event of reception of the tag-report. The same process applies to a peer tag (e.g., 511) sending a tag-report that is received by a tag (e.g., 501). Thereby, the process works in both directions as indicated by the two-way arrows connecting the small circles. It is noted that a single tag-report transmitted by a tag (e.g., 501) in coverage of one or more anchor nodes (e.g., gNB 521, 522) is received by in-range peer tags (e.g., 511, 512) as well as the anchor nodes. The dotted arrows illustrate SL synchronization signals 531, 532, 533 sent from the SL-UEs 561, 562 as SyncRef UEs to tags 511, 512, 513, in particular OoC tags that may use them as time reference instead of using a time reference from a gNB. The dotted line "Uu" 570-a, 570-b denotes that the SL-UEs 561, 562 are optionally also connected to, and in coverage of, a gNB 521, 522 (connection between gNB 521 and SL-UE 561, and between gNB 522 and SL-UE 562). It is noted that, when not in gNB-coverage, a SL-UE may act as a SyncRef UE under particular conditions as defined in TS 38.331 Section 5.8. Also, when in gNB-coverage, a SL-UE may act as a SyncRef UE under particular conditions. In an optional embodiment, a SL-UE that is in gNB coverage but is far away from the gNB (as determined by, e.g., a signal quality or signal level measurement followed by a comparison to a threshold) is allowed to transmit sidelink synchronization signals for the purpose of helping nearby OoC tags to synchronize their internal time reference.

Direct communication

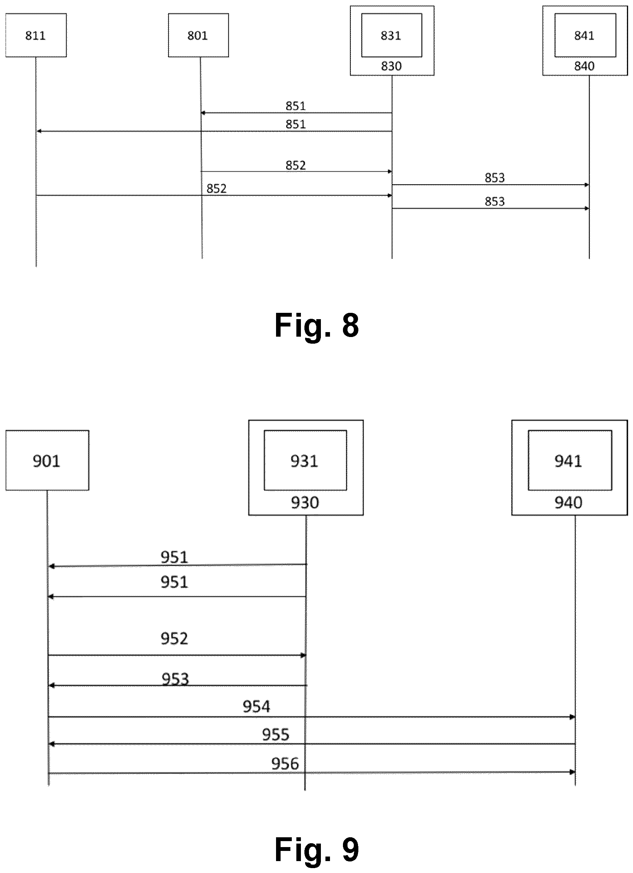

Fig. 8 schematically shows a signaling and processing diagram for a communication process between access device and tag, according to an embodiment of the present invention. In the embodiment that may be combined with other embodiments, the access device 831 (e.g., a base station or a communication device offering sidelink services) as part of a radio access network (RAN) 830, sends requests 851 for retrieving the identity or location of a tag to communication devices 801, 811 as tags. These requests 851 may be synchronization signals (e.g., MIB) and system information (e.g., SIB1) giving an indication of the capability to read tags. This capability may be indicated by using a specific closed access group (CAG) identity. The communication devices 801, 811 upon reception of the respective request 851 may then send a respective reply 852 providing their identity (as explained in other embodiments of the present invention) to the access device 831. The access device 831 may then forward this respective reply 852 towards another entity in the core network (CN) 840, e.g., a server 841 offering localization services.

In the case where the access device 831 is a base station, the reply 852 may be the initial physical random access channel (PRACH) enhanced to directly include the identity of the communication device 801, 811, thereby avoiding further round trips.

In the case where the access device 831 is a communication device offering sidelink services, the request 851 may be, e.g., sidelink synchronization signals or announcing discovery messages, and the reply 852 may be a discovery message.

In an embodiment, the access device 831 might filter or limit the amount the responses 852 that are forwarded based on the CAG used.

Fig. 9 schematically shows a signaling and processing diagram between access device and tag involving an authentication procedure between the network and the tag, according to an embodiment of the present invention. In the embodiment that may be combined with other embodiments, the access device 931 (e.g., a base station) as part of a RAN 930, sends requests 951 for retrieving the identity or location of a communication device 901. These requests 951 may be synchronization signals (e.g., MIB) and system information (e.g., SIB1) giving an indication of the capability to read tags. This capability may be indicated by using a specific CAG identity. The communication devices 901 upon reception of the request 951 may send a random access request 952 in reply. The access device 931 may assign a temporary RAN identity 953 to the communication device 901. The communication device 901 may send towards the CN 940 an identification request 954, wherein the identity may be protected as described in other example embodiments of the present invention or as the 5G SUCI. The CN 940 (and a server 941 offering localization services) may obtain a rough estimate of the location of the communication device 901 based on the access device 931 involved.

Optionally, a subsequent authentication procedure (955, 956) between the communication device 901 and the CN 940 may be executed, e.g., based on the level of trust that the CN has on the message 954. This authentication procedure may be based on primary authentication.

Optionally, the message 953 may be skipped and the messages 952 and 954 combined.

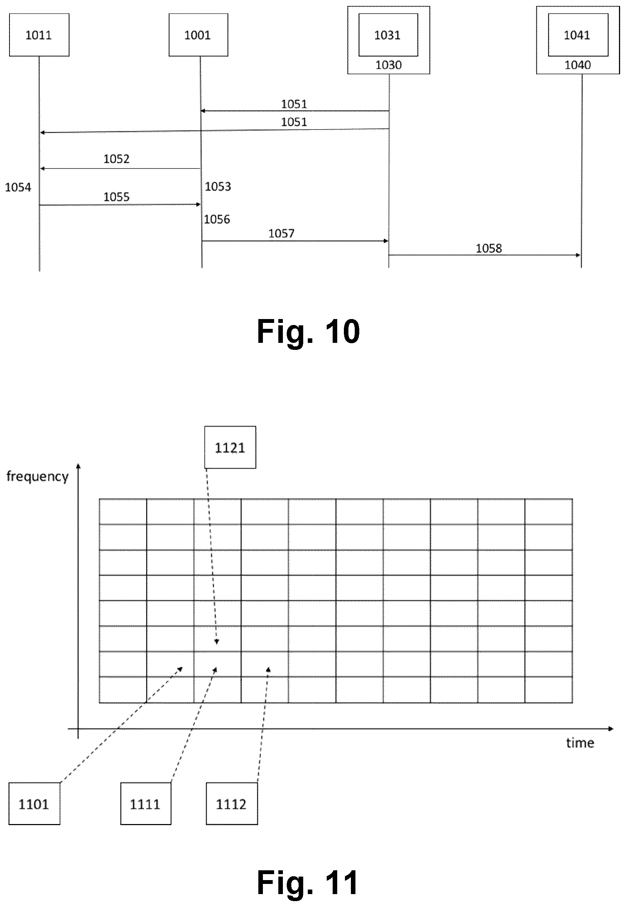

Fig. 10 schematically shows a signaling and processing diagram between access device and tag wherein a tag in coverage rebroadcasts a request from the access device, according to an embodiment of the present invention. In the embodiment that may be combined with other embodiments, the access device 1031 (e.g., a base station or a communication device offering sidelink services) as part of the RAN 1030, sends requests 1051 for retrieving the identity or location of communication devices (1001, 1011). These requests 1051 may be synchronization signals (e.g., MIB) and system information (e.g., SIB1) giving an indication of the capability to read tags. This capability may be indicated by using a specific CAG identity. The communication device 1001 is in range, but the communication device 1011 is not in range. A communication device may have been configured with a policy requiring the rebroadcast of a request 1051 or the request itself may include this command. The request may include a parameter indicating how many times the request is to be rebroadcasted, and a rebroadcasting communication device 1001 might decrease this parameter every time it is rebroadcasted. The rebroadcasted request 1052 may reach the communication device 1011 that may prepare its report as described in other example embodiments of the present invention, and may then send a reply 1055. The communication device 1001 may wait a maximum time for the reception of a second report 1055 coming from a second communication device (e.g., 1011) that may be out of coverage. If the second report 1055 arrives before the rebroadcasted request 1052 has been reached, the communication device 1001 may compute its own report, include the second received report 1056, and transmit the combined report 1057 towards the access device 1031 of the RAN 1030. The access device 1031 may forward this reply in message 1058 towards another entity in the core network 1040, e.g., a server offering localization services 1041.

In an embodiment that may be combined with other embodiments, the reply of a communication device (e.g., 852 in Fig. 8) may be transmitted at a timing and using frequency resources determined by an identity, e.g., the identity of the communication device, or the protected (hashed, encrypted) identity of the communication device, or dependent on the beam used to access the communication device. This is illustrated in figure 11, wherein the horizontal axis refers to timing resources and the vertical axis refers to frequency resources, and a block in the grid refers to same time/frequency resources. This may be a number of carriers used to transmit orthogonal frequency-division multiplexing (OFDM) symbols. Devices (1101, 1111, 1112, 1121) are assigned to different blocks. Given a block of resources, the devices may be required to listen (for other transmissions) before transmitting the reply, and/or wait a random period of time within the block before transmitting, and/or wait a random period of time (in discrete steps) before transmitting.

In an embodiment that may be combined with other embodiments, the request message (e.g., message 851 in Fig. 8) may include a configuration of a possible set of time windows or frequency resources that might be used by the communication devices (e.g., device 801 in Fig. 8).

In an embodiment that may be combined with other embodiments, the configuration of a possible set of time windows or frequency resources that might be used by the communication devices (e.g., device 801 in Fig. 8) may be done during an initial configuration phase, either online or offline.

Clock synchronization based on gNB and Sidelink

In further details, the OoC tags synchronize to the sidelink synchronization signals transmitted by the respective nearby SL-UE, while the in-coverage tags synchronize to the synchronization signals (sync signals) transmitted by the gNB. Due to the way in which the SL synchronization procedure is defined in 3GPP TS 38.331 (Release 16), the synchronization signals (SL sync signals) transmitted by the SL-UE will be synchronized to the gNB timing when the SL-UE is in coverage of the gNB. Alternatively, if an SL-UE is OoC of the gNB, it may also use a GNSS (e.g., a GPS) based timing reference if it has this component GNSS integrated, thereby it will also be time-synchronized to all nearby gNBs whose timing is based also on coordinated universal time (UTC) reference time. This time synchronization of tags allows the tags in a coverage area (i.e., the tags in coverage of either gNB or a gNB-connected SL SyncRef (synchronization reference) UE) to use a common time reference and hence to unambiguously determine the time window for tag-report transmission and reception.

In an optional embodiment, the synchronization signals (sync signals) transmitted by the gNB and/or the synchronization signals (SL sync signals) transmitted by the SL-UE, may also be used to provide the configuration data.

Sending tag-reports without clock synchronization/reference signal

In an example scenario where an OoC tag finds no gNB nor SL SyncRef signals on which to base its time window calculation, the OoC tag may still use an optional method to send its tag-report. In this case, the OoC tag may listen for a transmitted tag-report of a nearby tag, which is in coverage of gNB or SL-UE (i.e., the nearby tag can receive sync signals from gNB or SL-UE). Then, immediately after receiving this tag-report, the OoC tag may send its own tag-report on the same frequency/channel resources and also based on the configuration data included in the received tag-report. This method works if the indicated frequency/channel resources are available 100% of the time for SL in general or for tag transmissions in particular, i.e., it is not time-multiplexed with other purposes of cellular communication like uplink (UL)/downlink (DL). Using this method, the transmission of the OoC tag's tag-report will be very likely within the allotted time window and hence this information can still be used for location determination of the OoC tag as described for this invention. The advantage of this method is that the system becomes more robust against coverage loss and loss of (e.g., SL-UE based) temporary synchronization sources.

In an alternative example method, the OoC tag may also base its transmission time calculation upon multiple received tag-reports from nearby tags. That is, when detecting an OoC situation without synchronization signals present the tag may enable its radio for a longer time to pick up one or more tag-reports and, from this, infer and configure the used time window and frequency where the time window is by approximation. For example, if such an OoC tag receives a tag-report at time t1 with configuration data (config-data) indicating that the sleep time period (during which the radio transceiver is disabled) for tags to send tag-reports is 30 minutes and that the time window duration is 10 seconds, then the OoC tag may sleep for approximately 29:49 min and then turn its radio on to receive the next tag-report or series of tag-reports for the next time period of > 11 seconds. The OoC tag may configure its timing in such a manner to not miss the next time window based on the received configuration and on its own estimate of its own internal clock drift/inaccuracy. In this alternative example method, the maximum estimated clock drift for the tag is 1 second for the entire sleep period, so that it can sleep for 29:49 min before needing to enable its radio receiver again. In case of a perfect non-drifting internal clock, the OoC tag could sleep 29:50 min. After one or a few cycles like this, the OoC tag is able to rather well synchronize to the time window as used by other tags in the coverage area even without an external time synchronization signal present. It is noted that this approach works best if the OoC tags are in such case enabled to (and allowed to) transmit data in a non-slotted manner, as opposed to the usual slotted communication methods defined for existing 5G NR UL/DL/SL communications.

In an alternative example scenario where the SL-UE would be not present in the system architecture 400 of figure 4, then the OoC tag could not derive the time window during which it needs to send with sufficient accuracy because it could no longer see any timing reference or sync signals from the "missing" SL-UE. In such scenario, the OoC tag might stop transmitting until it is able to synchronize again to a timing reference.

In another alternative example scenario where a tag is configured (e.g., directly by gNB via DL) to act as a synchronization source for OoC tags (it is noted that this does not need to be necessarily 5G NR SL sync signals; for example, it might be something new that is more lightweight and power-efficient), then the tag as a synchronization source might perform one or more of the following steps:

- sending additional tag-report messages at predefined times (e.g., at start or at end of the time window);
- including additional sync/time data in tag-report messages that is readable to any other tags. When this additional sync/time data is triggered to be included, it does not need to be always included;

- sending a particular (new) type of sync signal, maybe in an adjacent RF channel, or on the same channel, periodically during the time window duration.

It is noted that an internal clock drift may be estimated based on the known inaccuracy of the timing circuitry (e.g., crystal oscillator) of the tag. Making an accurate estimate of drift may require measuring the circuitry temperature since the expected maximum inaccuracy is temperature-dependent. If no temperature measurement is available, a worst-case assumption for the temperature based on the valid temperature range of the tag could then be used.

An alternative example method for clock drift detection and correction may be to let in-coverage tags include a timestamp within their own tag-reports in a format that the receiving OoC tags can parse (e.g., not encrypted, or encrypted with a known groupwide key). Such a timestamp would allow the receiver to calibrate its own clock and, at the same time, compute an estimate of clock drift since the last time as the timestamp was received. This estimate can then be used to adapt the receiving window as indicated in the "11 seconds" of the above example. For example, with a more accurate drift estimate, the OoC tag might only listen for a time window of 10.4 seconds instead of 11 seconds, thereby conserving energy on the tag.

Then, the OoC tag may also mark its transmission of tag-report messages as special "out of sync coverage", e.g., with a bit flag, in the public data section of the tag-report messages, to ensure that other OoC tags do not use its transmission as a reference again. Also, the OoC tag cannot use a timestamp format based on a system frame number (SFN) since the OoC tag does not receive it. Therefore, the OoC tag may advantageously indicate another timestamp format in its own tag-report messages, e.g., an estimated SFN, or just an internal sequence number (ISN).

Time synchronization of tags using a collective/shared tag-report time window

In an example embodiment, based on the "config-data" parameter which is disseminated as configuration data by gNBs to all in-coverage tags, a tag may select the time window during which to send and receive tag-report messages. In an example, all gNBs may periodically send this configuration information in a system information block (SIB) data structure. Sidelink UEs or Relay UEs acting as SyncRef UEs may also periodically send this SIB data for allowing any remote UEs and tags, which are out-of-coverage, to use it. The in-coverage tags may repeat the received configuration data as a single "config-data" element in their own tag-report messages, thereby allowing out-of-coverage tags to also receive the configuration information. Similarly, the out-of-coverage tags receiving this configuration information may again include the "config-data" element into their own tag-report messages, so that tags that are even further out of coverage can also receive the relevant configuration. This may be always done in an optional embodiment, while in another optional embodiment, this is only done based on the outcome of a decision algorithm. For example, configuration may be not included when there is not sufficient space in the tag-report message to include it, while it may be otherwise included. Or, as another example embodiment, configuration may be included only when a configuration bit (flag) indicates inclusion of the "config-data" for OoC tag's tag-reports and when there is also sufficient space left in the tag-report message. It is noted that the size of the tag-report message may depend on the number of included tag-sightings and on other factors as well.

In the example embodiment of figure 4, a tag may pick a random time within the time window for its transmission and attempt a sidelink discovery message broadcast transmission at that picked time instant. Based on the existing 3GPP NR V2X Mode 2 (i.e., mode 2 of resource selection as specified for NR SL communication), a suitable "free" resource will be selected at that time instant or at a following time instant if no resources are free at the original time instant. In the case where the tag detects that its transmission is interfering with another transmission or is very close in time to another transmission, the tag may randomly pick a new free time slot to use to repeat its tag-report transmission. The tag may also pick a new channel within the same time slot to repeat its tag-report transmission on that new channel. This embodiment attempts to keep the Rx time window length for the tags minimal while allowing the density of tags and/or the number of tag-report messages in a geographical area to still scale dynamically.

Embedding configuration data in the synchronization/reference signal

In an example embodiment, a synchronization signal, which is used by a tag to determine its transmission timing, may be used to embed a few bits of configuration data ("config-data") that the tags can decode from it. This synchronization signal may be the SL signal sent by a SyncRef UE, or the sync signals sent by the gNB, or both. This may be useful in the case where a tag does not want to spend the energy to receive and decode the full RAN configuration data as broadcast as part of master information blocks (MIB)/system information blocks (SIB).

Message types for tag-reports - ProSe PC5 direct discovery messages

In the example embodiments of the present invention, the message used for the tag-reports may be the ProSe PC5 direct discovery message type of 3GPP TS 24.554 (Release 17). It may use "open discovery" (e.g., "open 5G ProSe direct discovery announcement") for which all tags in an area can participate in the protocol, or it may use "restricted discovery" if specific key material is pre-installed in each tag of the group of tags that cooperate while excluding any tags of other groups. It is noted that the term "group" of tags may refer to all tags in an area/country even, or a group of tags owned by a particular organization, or tags implementing a particular application standard, and so on.

The "open discovery" may be used with or without additional cryptographic protection. In the present disclosure, it is used without additional cryptographic protection only for simplicity reasons.

It is noted that, in current ProSe specifications, a discovery message reception is often followed by a selection of a suitable (discovered) candidate UE with which a communication link is then initiated using ProSe direct communication request (DCR). The present discovery messages defined for localization do not use this DCR. From a tag's viewpoint, this is fine as it most likely will not even implement DCR and ProSe PC5 direct communication in general. Indeed, it only uses discovery messages to communicate tag-reports. For an SL-UE receiving tag-reports, its UE (pre)configuration needs to be specifically set to operate the UE as an "anchor" that collects tag-reports and then sends tag-sightings to the network, without triggering a DCR to the tag which would make no sense. This can easily be configured based on particular properties of the discovery messages, e.g., a specific relay service code (RSC) or set of RSCs that is only associated to localization of tags and not to some other ProSE direct communication service that the SL-UE can also implement.

Another example of a property of a ProSe direct discovery message that may be used to indicate the purpose of the message as a tag-report per one of the example embodiments of the present invention, are the "Discovery model value" bits 1 and 2 in the header. Among the four two-bit combinations possible, two are used to indicate Model A/B respectively, while the other two-bit combinations are still available for such purpose, e.g., '00' could be used to indicate a tag-report message model.

Tag-report structure

In an example embodiment, a tag-report or tag-report message may contain a number of fields used to identify the tag and help to locate it (including retroactively locating it - as useful for non-real-time location systems). The tag-report may at least comprise the following fields:

- configuration data (config-data);
- timestamp;
- Tx-power indication;
- secure-section-data.

Furthermore, the tag-report may contain a vector (or a set, or a collection) of tag-sightings including information of tag-reports observed by a tag upon receiving the tag-reports, i.e., per tag-sighting it includes the data of the tag-report and may include metadata associated to that tag-report.

It is noted that the curly brackets { } in the following relationships denote a composition of data items (or parameters, or elements), for example: a concatenation, an inclusion in a tag, a length and value (TLV) structure, an abstract syntax notation one (ASN.1) structure, a concise binary object representation (CBOR) object, and so on. Square brackets [ ] in the following denotes an optional element which is only included when relevant data is available to be communicated in that element.

In an example embodiment, the tag-report may be given by the following relationship:

$$\text{tag-report} =$$

$$\{ \text{config-data} , \text{timestamp} , \text{tx-power} , \text{secure-section-data} , [\text{Tag-sightings}] \} \qquad (1)$$

where Tag-sightings is an optional field which is an array of length 1, ..., N, such that Tag-sightings = { Tag-sighting-1, ..., Tag-sighting-N }. The maximum value for N may be determined as a constant applicable to the specific embodiment implementation, or it may be determined algorithmically by the sender.

The format of a single basic Tag-sighting-i (where i = 1, ..., N) may be given by the following relationship:

$$\text{Tag-sighting-i} = \{ \text{tx-power} , \text{rx-power} , \text{timestamp} , \text{secure-section-data} \} \qquad (2)$$

As can be seen, the "config-data" item may be removed from the relationship (2) of the tag-sighting-i since it has already been transmitted in the enclosing tag-report once as defined by the relationship (1). This reduces the payload size of the tag-report significantly. All tags typically use the same configuration data "config-data" at a particular moment in time and at a particular location/cell. That holds because this data is not changed so frequently, typically. The value of "config-data" used currently and previously used values of "config-data" are also known to the RAN and to the core network/location service because "config-data" is configured and/or distributed by the RAN of a particular area. For example, if the configuration changes at some time T, and the RAN and CN/location service receive a tag-sighting that was made before time T, they can then derive that this was sent using the old configuration data. In case the RAN determines the configuration data independently from the location service, or determines it based on input parameters/data communicated by the location service to the RAN, the RAN may inform the location service of the determined configuration data when required or as part of tag-sightings data sent from the RAN to the location service.

"Config-data" structure

In an example embodiment, the "config-data" structure may be kept very small to reduce the payload size of tag-reports, and may be in an encoded form. For example, it may be 8 bits and encode the following parameters:

- a particular predefined frequency band/resource to use (3 bits);
- a particular time schedule (5 bits),

where both are from a set of predefined options. It is however noted that the "config-data" structure may also use more data bits to describe a more fine-grained schedule.

As an example, the following table I shows the option settings that may be predefined for the frequency band:

| Frequency band value (3 bits) | NR SL frequency band | Channel/RB-set/subcarrier |
|---|---|---|
| 0 | N85 | 22 |
| 1 | N86 | 24 |
| 2 | N87 | 30 |
| 3 | N88 | 32 |
| 4 | N123 | freq hopping sequence N |
| 5 | N124 | 44 |
| 6 | "sense" | (default channel(s) as defined for the sensed/detected band) |
| 7 | "disabled" | N/A |

Special cases may be found for the frequency band value: "6" where the required frequency band is sensed by looking for SL tag-reports in all supported bands and by selecting the one for which most tag-reports are found; and "7" where the tags are disabled from transmitting tag-reports. The frequency band value "4" defines not a fixed channel/RB-set but rather a frequency hopping sequence N, where N is defined by the time schedule parameter.

As an example, the following table II shows a subset of the option settings that may be predefined for the time schedule parameter:

| Time schedule value (5 bits) | Time window offset i.e., start time in sec since t0 | Time window duration (sec) | Time window repetition every... seconds |
|---|---|---|---|
| 0 | 0 | 10 | 300 |
| 1 | 30 | 10 | 300 |
| 2 | 60 | 10 | 300 |
| 3 | 80 | 10 | 1800 |
| 4 | 100 | 5 | 1800 |
| 5 | 110 | 2 | 1800 |

(continued)

| Time schedule value (5 bits) | Time window offset i.e., start time in sec since t0 | Time window duration (sec) | Time window repetition every... seconds |
|---|---|---|---|
| ... | ... | ... | ... |
| 20 | 500 | 10 | 15000 |

In the above second column, t0 may be defined as a reference UTC time such as 01-Jan-2021 or 01-Jan-1900 (as used in 5G NR 3GPP TS 38.331 (Release 16)).

Coordination of tag timing by tag learning its optimal transmission time and extending time slot automatically if needed

In an example embodiment, an additional tag timing coordination mechanism may be used to avoid that all tags in an area may start transmitting their tag-reports at the same time, or transmit their tag-reports within a same (limited) subset of time slots within the time window. The term "time slot" is here used to denote a period of time in a slotted wireless communication system in which a tag-report message can be fully transmitted. In this example embodiment, the "time slot" is assumed to be equal to a 5G NR slot period. However, it is noted that a "time slot" is not necessarily equal to a 5G NR slot period and that it may be shorter (e.g., a symbol period, two symbol periods, etc.) or longer (e.g., two 5G NR slots, or longer). From the third column of the above table showing the option settings that may be predefined for the time schedule parameter, a "target duration" of the time window may be defined for any configuration data index value relating to time window. Thus, each tag may initially monitor the RF messages received during this time window on the allowed channel(s) and then note the relative times in the time window at which other messages may be received. Based on it, each tag may randomly pick a time slot in the target time window and the corresponding channel that is still "free", i.e., for which no transmission was received in that time slot and on that channel. However, if no time slot is free or if the percentage of occupied time slots is above a threshold (e.g., > 90%), then the tag may apply an algorithm to extend the default slot in time and pick randomly one of the free time slots within this time-extended slot. This time slot extension may require alternatively using new L2/L1 (PHY/MAC) mechanisms in 5G NR SL as it may differ from the existing 3GPP NR V2X Mode 2 (i.e., mode 2 of resource allocation as specified for NR SL communication) of the basic embodiment. This required alternative approach may be useful, for example, if the existing SL Mode 2 approach is too energy-consuming and a new more efficient scheme is needed. But, the time slot extension as such may also be used in combination with existing SL Mode 2 resource allocation.

Time stamp format

In an example embodiment, the timestamp format may be encoded as one of the following:

- a timestamp value (e.g., 6-bit or 10-bit) that wraps around and encodes a portion of the system frame number (SFN), e.g., the 6 most significant bits (MSB);
- a representation of UTC time, e.g., taking the N least significant bits of a particular encoding of the UTC time such as number of seconds since 01-Jan-2022;
- an internal timer value (e.g., 16 or 32-bit) that is loosely synchronized to SFN, so that SFN is used to estimate internal clock drift of the tag and compensate for it;
- a sequence number that is increased +1 for each tag-report transmission. It may be, for example, 8-bit or 16-bit or another length, and it may wrap back around to 0 after reaching max-value (e.g., 255);
- a Lamport timestamp value or vector clock value;
- a combination of some of the above: for example, a timestamp value plus a sequence number.

Tx-power format and control in tags by a policy

In an example embodiment, as part of the "config-data" bits, a particular Tx-power control policy may be optionally or additionally indicated to tags. Such policy can control the Tx-power to use by the tag to send its tag-report. Tx-power may be a 4-bit value referring to a predefined table of 16 possible Tx-power level settings for tags.
An example of a "config-data" of 16 bits that does include a Tx-power control policy may include:

- a particular predefined frequency band to use (3 bits);
- a particular time schedule (8 bits);

- a Tx-power policy selection (5 bits).

Firstly, the "config-data" bits may indicate a Tx-power policy that prescribes a particular default Tx-power level. The default is used when the tag-sightings in the time window are below a particular threshold network termination 1 (NT1) (i.e., tag-sightings < NT1, indicating "not busy" in the local area on the used RF channel/band).

Secondly, when more tag-sightings are made (i.e., tag-sightings ≥ NT1, indicating "busy"), then a tag may automatically reduce its Tx-power by a pre-agreed amount in order to cause less tag-sightings in neighboring tags, making it automatically "less busy" in the used RF channel/band in the geographical area.

Thirdly, if the number of tag sightings is below a particular threshold network termination 2 (NT2) (i.e., tag-sightings < NT2, indicating "I hardly see anyone else"), then a tag may automatically increase its Tx-power by a pre-agreed amount in order to cause more tag-sightings in neighboring tags, which may be useful in a sparse tag environment.

Fourthly, a policy might also define what to do when seeing only tag-sightings with a very low received signal strength (Rx-level) while the Tx-power of these tag-sightings (as indicated in the "Tx-power indication" field) is still relatively high. Then, a tag may infer that it is far away from all other tags and thus increase its Tx-power by some amount determined by the policy.

Rx-power format

In an example embodiment, the "Rx-power" item may be an 8-bit value referring to a predefined table of 256 possible received signal strength indication (RSSI) values for the tag-sighting. In another example embodiment, the value may refer to 256 possible reference signal received power (RSRP) values for the tag-sighting, in which case the RSRP is determined by the receiver by measuring the power of a particular part of the tag-report signal that contains a reference signal sequence. It is noted that the tag-report may contain some reference signal portions, or "header", or "start symbol".

Secure-section-data structure

In an example embodiment, the "secure-section-data" item may be a fixed-length binary sequence, e.g., 128 or 256 or 512 bits. The optimal length will also depend on the security properties of the secure-section-data, e.g., based on which cryptographic function is used or on which encryption key (length) is used. It is noted that a tag-sighting contains the secure-section-data exactly as taken from a sighted (i.e., received) tag-report;

In an example simplified embodiment, it is assumed, for simplicity reasons, that a tag may not sign/authenticate the tag-sightings that it reports. However, it is noted that, in an alternative example embodiment, a tag may sign/authenticate the tag-sightings that it reports for increased location security/tamper-proofing. Signing a tag-report with embedded tag-sightings allows a location service that collects and verifies all tag-sightings to verify that none of the tag-sightings as embedded in the tag-report were added, removed or changed, thereby improving the trustworthiness of the derived location estimates and improving the resilience against any such types of data modification attacks.

In the example simplified embodiment, the secure-section-data may be an output of a cryptographic function F(.) over particular data items, where the pipe | character denotes concatenation of data into a sequence. The secure-section data may be given by the following relationship:

$$\text{secure-section-data} =$$
$$\{ F( \text{tag-temp-id} \mid \text{config-data} \mid \text{timestamp} \mid \text{tx-power} \mid \text{status-bits} ) \} \qquad (3)$$

where F(.) may be a cryptographic hash function, or otherwise a hash-based message authentication code (HMAC) function that is a message authentication code that uses a cryptographic key in conjunction with a hash function, or a block cipher-based message authentication code (CMAC) algorithm that may be used to provide assurance of the authenticity and hence the integrity of binary data. The function F(.) may additionally involve truncation operations (TRUNC) or Boolean operations (e.g., XOR) in any composition as shown in the relationship (5).

In the relationship (3), the "tag-temp-id" and "status-bits" items are used by the tag when creating the secure-section-data for the tag-report but are not included in the tag-report message as clear-text data. This means that the location service has to infer the values of these items either through lookup in a secure database (for case of "tag-temp-ids") or through brute-force trying all bit combinations (for case of "status-bits").

In the example simplified embodiment, the "tag-temp-id" item takes a role of a symmetric "secret key" only known to the tag itself and to the location service. It is the reason why it needs to be sufficiently long, e.g., at least 128 bits, to avoid brute force attacks to guess the temporary ID tag-temp-id.

In the example simplified embodiment, the "status-bits" item may be 4 bits and include:

- a battery-status indicator bit (1 = ok, 0 = low-battery);
- a compact delta encoding of a sensor value of a sensor on the tag (00 = no change; 01 = value increased +1; 10 = value decreased -1; 11 = sensor value is back to a preconfigured threshold) which enables the location service to reconstruct over time the actual sensor value based on multiple tag-reports from the same tag;
- a gNB-coverage indicator bit (1 = in-coverage, 0 = out-of-coverage).

Cryptographic function using HMAC and optional salt

In an example embodiment, the tag-report and the cryptographic function F(.) may be defined as follows based on a HMAC:

$$\text{tag-report} = \{ \text{ [config-data,] [salt,] timestamp, tx-power, F(.) } \} \qquad (4)$$

$$F(.) = \text{XOR( TRUNC( HMAC ( tag-temp-id, [config-data] | [salt] | timestamp | }$$
$$\text{tx-power ), 40) , status-bits | 0x00000000 )} \qquad (5)$$

where:

- HMAC(K, A) computes the HMAC of A with key K;
- TRUNC(A, B) returns B bits of A, e.g., the B LSB of A;
- XOR(A, B) performs the bitwise xor of bitstrings A and B;
- A | B performs the concatenation of bitstrings A and B;
- salt: an optional random "salt" parameter used as cryptographic salt, chosen by the tag;
- config-data: optionally shown here to cover embodiments where it is included or not included;
- status-bits: 8 bits of status data determined by the tag.

The optional "salt" item/parameter may be used in this example embodiment to add extra randomness and more bit changes to the input of function HMAC(.). For example, if timestamp is chosen such that it does not change very frequently (maybe the timestamp only updates each minute) and if other inputs like status-bits, tx-power, and also config-data, do not change during that time, then such a situation may lead to an identical tag-report that cannot be distinguished from the previous one, thereby posing some risks: e.g., an attacker may trace both tag-reports to the same node which is not wanted. Thus, a salt may be beneficial *inter alia* to avoid those risks. If a salt parameter is used in the HMAC(.) computation, the salt value must also be included in the tag-report, and also in each tag-sighting data, the related salt value (taken from the associated tag-report being sighted) must be included such that the location service may eventually use the correct salt values to compute cryptographic functions. It is noted that the above relationship (4) of the example embodiment shows the salt value optionally included in the tag-report, and that, although not included therein for purposes of simplicity, the tag-sightings data might however be also included therein in the case of an alternative example embodiment.

Upon reception, the gNB/CN may convey the tag-sighting data to the location service. The location service may then take all tag-temp-ids known to be in the area of interest or likely to be in that area, compute HMAC as indicated, and take 40 bits LSB of the output (i.e., TRUNC(x,40)). The location service may thus know whether the reported tag-temp-id is okay or not by checking the 32 least significant bits (LSB) (4 bytes) against the computed values. The server may then retrieve the status-bits by XORing the secure-section-data i.e. the F(.) component within the received tag-sighting with the computed truncated HMAC(.) value and taking the 8 most-significant bits (MSB) (1 byte) of the outcome. Although in this example embodiment, the status-bits are not integrity protected, they however present the advantage that the status-bits are included in the tag-report and confidential, such that the location service does not need to iterate over all possible status-bits values by brute force to infer the right status-bits values, thereby saving computational time on the location service and allowing longer status-bits sequences (e.g., 224, 128, or 96 bits instead of just 4 or 8).

Allocation of tag-temp-id values

In an example embodiment, each tag may be assigned one or more temporary IDs (i.e., "tag-temp-id" items or tag-temp-ids) by the core network (CN), e.g., through the location service, in a secure way. This is done using a regular 3GPP defined communication such as direct connection to a gNB (over UL/DL) or a relayed connection via a UE-to-Network Relay UE (over SL). Also, tag-temp-ids may be preconfigured on the tag for the possible cases in which the tag (e.g., OoC tag) is unable to reach the CN during operation. These values are stored in a secure storage element on the tag. Because the location service, through the secure database lookup, also knows the preconfigured tag-temp-id values, the location service may try many values of tag-temp-id for those tags that it knows to be in the neighborhood of a particular gNB service area, based on previous tag-reports or based on connection log information for gNBs. When the location service finds the tag-temp-id value that matches the value that the tag used in the computation of the secure-section-data, the location service's own computation result of the hypothetical secure-section-data using that tag-temp-id value will match to the received secure-section-data in the tag-sighting. This enables the location service to identify the particular tag out of many (e.g., millions) of others.

In an example embodiment, the tag-temp-id values may be assigned as cryptographic random values: for example, 128 bits of length, or more. These tag-temp-ids (IDs) have a similar role as temporary symmetric keys for security.

A tag may periodically (e.g., once per week) set up a full connection session to the RAN and CN and use this session to retrieve from the location service, an update of one or more tag-temp-id values to use that are securely communicated to the tag and then stored within the secure storage space in the tag. This can only be done when the tag is in coverage of a gNB or of a suitable UE-to-Network Relay UE that can provide a connectivity service to the tag. It is noted that this is done as little as possible to conserve energy on the tag.

A tag with multiple pre-stored tag-temp-ids (IDs) may cycle through these IDs based on a predefined policy, e.g., a timer to limit the time during which a single ID is used, or cycle the IDs based on UTC time/SFN communicated by a gNB or a Relay UE, when the tag is in coverage of such node. Using pre-stored IDs may be useful for tags that are out of coverage for a longtime or for their entire lifetime even. A particular means of cycling through tag-temp-ids may also be to calculate their values based on a hash function F( timestamp, tag-id ), where "tag-id" is a stable ID of the tag and "timestamp" is the timestamp when the calculation is made. In this case, the tag reports this same "timestamp" value in its tag-report structure so that the location service can also derive the same tag-temp-id that the tag has used.

In an example embodiment, one or more tag-temp-ids may be preconfigured in a tag (e.g., in a factory, by a vendor, and so on) before deployment in the field, so that the tag can work even when not in gNB-coverage or in relay-coverage. In an alternative embodiment, the preconfiguration could be done in the field with a dedicated tool using, e.g., short-range communication (like BLE, Wi-Fi, or 5G NR SL D2D communication, or NFC).

## A temporary ID protected, as part of a tag-report, by a hash function without status-bits

In an example embodiment, a temporary ID (i.e., a "tag-temp-id" item or simply a tag-temp-id) may be part of a tag-report that may be given in a lightweight manner, for example, without using standard encryption methods and without including status bits, and by using a hash function H(.), according to the following relationship:

$$\text{tag-report} = \{ \text{timestamp, tx-power, H( tag-temp-id | timestamp | tx-power) } \} \quad (6)$$

Although the "tag-temp-id" item is included in the hash calculation, it may not be sent over the wireless communication channel. The location service has to spend resources on trying all possible combinations, e.g., a few 1000s up to several millions of known tag-temp-ids in a particular target area, which may be defined as a gNB/cell or an intersection area of two or more gNB cells. Although not included in the above relationship (6) of the present example embodiment, it is noted that the "config-data" item might also be included therein in the case of an alternative example embodiment. The "config-data" item may be included only in a subset of transmitted tag-report messages in order to reduce bandwidth usage and power consumption on tags.

## Sending encrypted status-bits data

In an example embodiment, if a larger amount of status-bits data however needs to be sent and the status-bits data needs to be still integrity-protected and confidential, then encrypted status-bits may be included in the tag-report of the above relationship (6). Optionally, the tx-power and timestamp fields may also be encrypted, although this is not shown in the above relationship (6). Thus, the tag-report and the secure-section-data may be respectively given by the following relationships:

$$\text{tag-report} = \{ \text{config-data , timestamp, tx-power, secure-section-data } \} \quad (7)$$

$$\text{secure-section-data} = \{ \text{ E}( \text{ tagK, status-bits } ), \text{ F}( \text{ tag-temp-id } | \text{ config-data } | $$

$$\text{timestamp } | \text{ tx-power } | \text{ E}( \text{ tagK, status-bits } ) ) \} \tag{8}$$

As shown, the secure-section-data may contain the cryptographic F(.) part and additionally encrypted status-bits in E(.), where E( tagK, status-bits ) is an encryption function to encrypt the "status-bits" data using a (private) key "tagK" of the tag.

On its side, the location service may have a corresponding key or a same key to decrypt, by means of the function D(.), the status-bits again, according to the following relationship:

$$\text{status-bits} = \text{D}( \text{ tagK}', \text{ encrypted-data } ) \tag{9}$$

where D( tagK', encrypted-data ) is a decryption function to decrypt the "encrypted-data" data using a key tagK'. The keys tagK and tagK' may be defined by the location service similarly to tag-temp-id, or may be derived from it. If tagK == tagK', then a symmetric key encryption is used. For an asymmetric (i.e., public/private key-based) encryption and decryption, tagK may be the public key used for encryption and tagK' may be the private key used for decryption. The asymmetric option has the advantage that if an attacker manages to compromise a tag or number of tags, then the attacker might not obtain the tagK' needed for decryption of (earlier and/or future) recorded messages that contain E( tagK, status-bits ). Indeed, the attacker should attack the location service infrastructure itself to obtain tagK', which may typically be better protected than a low-cost embedded device like the tag and thus harder to successfully attack.

In an alternative example embodiment, the function F(.) may be computed over the true value of status-bits instead of the encrypted value E(.), as given by the following relationship:

$$\text{secure-section-data} = \{ \text{ E}(\text{tagK, status-bits}), \text{ F}( \text{ tag-temp-id } | \text{ config-data } | $$

$$\text{timestamp } | \text{ tx-power } | \text{ status-bits } ) \} \tag{10}$$

Then, it is up to the location service to perform many computations of F(.) using as input, not only readily available data from the tag-report but also the decrypted status-bits. In other words, for each hash computation F(.), the location service has to first perform the decryption function D(.) with a corresponding stored key, thereby increasing the computational load. However, this may have the advantage that it may become harder for attackers to launch a brute-force attack by trying many tag-temp-id values. In combination with the above asymmetric option, another advantage may be that an attacker getting hold of the public key tagK stored within the tag may still not execute the function D(.) to obtain the status-bits, thereby making much harder for the attacker to use brute-force methods to decode the recorded tag-reports sent by the tag (e.g., by iterating over many generated potential tag-temp-ids), because the attacker is missing the required input value "status-bits" to do such computation/calculation.

Sending a tag-temp-id hint or digest as part of the tag-report

In an example embodiment, a hint or digest of tag-temp-id may be communicated within a tag-report to help to speed up the search through 1,000s up to 1,000,000s or more of tag-temp-ids by the location service. Digest length may be configurable so that the system can scale. This configuration may be part of the "config-data" selected profiles or of a separate "config-data" field indicating the digest length in bits. For example, a 2-bit digest already reduces the hash computations on the location service needed by 75% on average, while not disclosing much about the true identity of the sending tag.

The hint may be computed in various ways, e.g., by taking every Nth bit of the tag-temp-id or a single parity bit computed over the tag-temp-id.

Sending information about next tag wake-up time in tag-report

In an example embodiment, a tag may send information in its tag-report that identifies, or helps to identify, the next time slot that the tag will wake up again to perform a new tag-report or to listen to tag-reports. Several scenarios may occur by receiving this information:

- if a neighbor tag receives this information about next wake-up time for a transmission, it may adapt its own wake-up schedule to receive at that time;
- if a neighbor tag receives this information about next wake-up time for reception, it may adapt its own wake-up schedule to transmit an additional tag-report at that time such that the tag may receive this additional tag-report during its next wake time;
- if a gNB receives this information about next wake-up time for reception, it may schedule the transmission of new tag configuration data, or a tag "paging" request, or other message indicating DL data for the tag, at the next wake-up time:

  • if the tag is later on detected by a different gNB indicating that it has moved to a different cell coverage area during its sleep cycle, the said gNB that had a transmission scheduled may remove the scheduled transmission for that specific tag;

- if a gNB receives this information about next wake-up time for transmission, it may schedule its cellular communications traffic UL/DL such that sufficient resources are available in the next wake-up time slot to allow the tag to make its transmission without too much interference caused by that other UL/DL traffic:

  • if the tag is detected by a different gNB indicating that it has moved to a different cell coverage area during its sleep cycle, the current gNB may remove the scheduled reception for that specific tag. Instead, the current gNB may, for example, use the time slot for other purposes, or keep the time slot for listening to other (potential) tags that may use this time slot in the future;
  • if a SL-UE receives this information about next wake-up time for transmission, it may configure itself to listen at that indicated wake-up time for any transmission of the tag. If it receives such transmission, it can report it to the location service or alternatively to its gNB.

The form of this information may include:

- an indicator of a time delta, or a time slot in the future, e.g., a timestamp/SFN number/UTC time value, or parts/portions thereof;
- energy/power collection status information from which a receiver (e.g., gNB) can deduce the next time of wake-up of the tag exactly or approximately.

Private configuration of a tag's Rx time window by gNB

In an example embodiment, a gNB may privately configure the time window of a tag to modify the default calculated time window of reception, extend it, or replace it. This may be done using private (security-protected) unicast communication with the tag. The gNB might do this for a tag T for the purpose of better reception of tag-reports by the tag T from neighbors of the tag T that may be sending their tag-reports quite "early" or "late" in the time window. Or, from neighbors of the tag T that operate under a different gNB/cell and hence may operate with different configuration information, e.g., another time window.

Private configuration of a tag's Tx time window by gNB

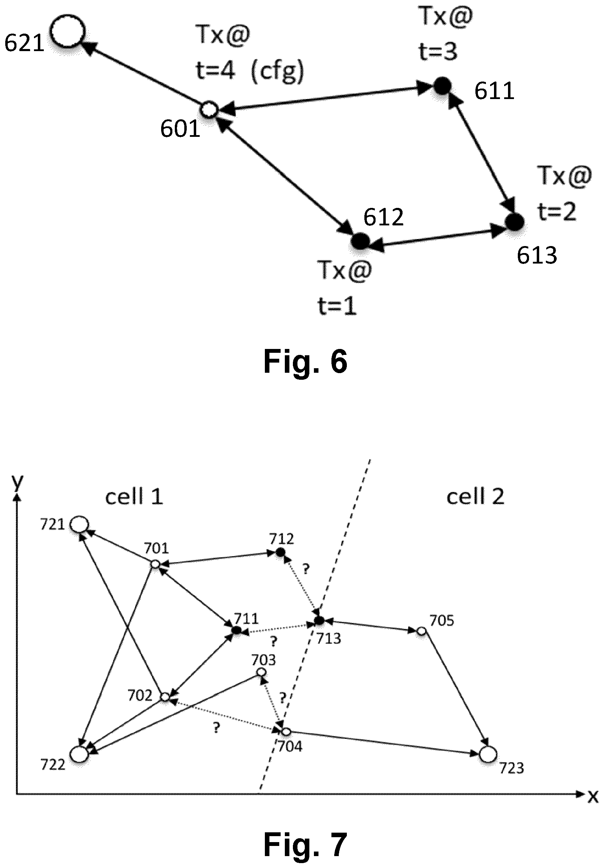

In an example embodiment, a gNB may privately configure the time moment of sending tag-report of a particular tag T, using, e.g., private unicast communication to the tag T. The purpose of this may be to enable faster propagation of tag-sightings through the network. Figure 6 schematically shows an example private configuration by the gNB 621 (large circle) of a Tx time window for the in-coverage tag T 601 (small empty circle), according to an embodiment of the present invention. As depicted, there are OoC tags 611, 612, 613 (small filled circles) that report at respective random times t = 1, 2, 3 (Tx@t=1, Tx@t=2, Tx@t=3). The gNB 621 then configures (cfg) the in-coverage tag T 601 with Tx time of t = 4 to ensure that, when this in-coverage tag T 601 sends (one-way arrow) its report message to gNB 621, this report message includes all collected tag-sightings from the other tags 611, 612, 613 at times 1, 2, 3. In this way, the location service (not shown) can get the most up-to-date information and the latency between the moment of sending a tag-report and the moment of generating a location estimate by the location service is decreased, on average.

It is noted that, ideally, the rightmost tag 613 would report at t = 0 so that its recent tag-sighting could also be included by the tag 612 that reports at t = 1 (Tx@t=1). But unfortunately, that is not possible because the OoC tags 611, 612, 613 are not reachable by gNB 621 in this example embodiment. However, this may be solved in different ways, e.g., by configuring the other tags via a relay UE, the in-coverage tag T being able to act as a simple relay even. Other solutions may be proposed, in particular the solution as presented hereafter.

Automatic configuration of Tx-time for tag-report for minimal latency of tag-sightings

With reference to the example figure 6, automatic configuration of Tx-time for a tag is possible by observing the connectivity status of itself and its neighbors. In particular:

-    the left tag 601 (depicted as corresponding to Tx@t=4) determines that it is in coverage of gNB 621: it may then schedule itself late in the time window;
-    the middle two tags 611, 612 (depicted as corresponding to Tx@t=1 and Tx@t=3) determine that they are OoC of gNB 621 but that they have a neighbor 601 (depicted as corresponding to Tx@t=4) in coverage of gNB 621: they may then schedule itself in the middle of the time window;
-    the right tag 613 (depicted as corresponding to Tx@t=2) determines that it sees no neighboring tags that are in coverage of gNB 621 and that it is out of coverage of gNB: it may then schedule itself early in the time window.

Such in/out-of coverage status may be deduced by a tag by including relevant status bits in the public data section of the tag-report, for example, such as:

-    in-gNB-coverage-bit: only set to "1" by a tag if in gNB-coverage;
-    in-coverage-neighbor-bit: only set to "1" if at least one neighbor tag has during the previous time window reported "in-gNB-coverage-bit=1".

It results therefrom that the tag-report messages from the far-away (i.e., rightmost) tags (e.g., 613) propagate sooner to the gNB (e.g., 621), thereby reducing latency and leading to a more up-to-date location estimate for the tag (e.g., 613). For example, if the tags report hourly, then a tag-sighting of the rightmost tag (e.g., 613) might always be 1 hour old when received by the location service, or 2 hours old, depending on the randomly selected transmission times of tags and assuming for this example case that tags will usually keep the same randomly selected time slot within a time window. Indeed, in the example of the rightmost tag 613, it might be 0, 1, 2, or 3 hours old depending on the scheduled time and 3-hop propagation of the tag-report from the tag 613. By applying this example embodiment, the tag-sighting might always be ~0 hour old (perhaps, a few seconds) when received by the location service.

Including hop-limit or hop-count in a tag-report

In an example embodiment, the tag-report message may include a hop-limit or hop-count value in the public data section. This enables a tag to, e.g., decide to not further forward the tag-report in the form of a tag-sighting to other tags/UEs, for example, if the hop-count value counts up until reaching a preconfigured threshold or if a hop-limit value counts down until reaching 0. This has the advantage of improving efficiency because particular tag-reports are not re-sent for a long time or many times. Another advantage is that hop-count/hop-limit information if included in tag-sightings may potentially enable the location service to better estimate the location of a tag.

Including "need-forwarding" bit in tag-report

In an alternative or additional example embodiment with respect to the above hop-limit/hop-count functionality, a tag-report may include a "need-forwarding" bit. If set (1), then the tag-report may be forwarded as a tag-sighting to other tags/UEs. If unset (0), then a tag is not supposed to include it in a tag-sighting, and only gNBs will then collect this tag-report and report it as tag-sighting to the location service. Equivalent to this bit, a hop-limit value, e.g., of 0 or 1 (depending on the protocol convention used) may be used as indicator of "not forward" for a hop-limit = 0 (i.e., the tag-report will be not forwarded) or "need forwarding" for a hop-limit = 1 (i.e., the tag-report may be forwarded once more).

Priority value included in tag-report

In an example embodiment, a tag-report may include a priority value (e.g., 2-bit) in the public data section. This has the advantage of helping the tags sending tag-sightings prioritize between the tag-sightings to include in their tag-reports. For example, a tag may include as many tag-sightings as fit within a particular tag-report target size in bytes; starting with the inclusion of tag-sightings with highest priority level, then including the tag-sightings with one lower priority level, and so on until the target tag-report size is reached (or, the target tag-report size would be exceeded by including another tag-sighting) or until there are no more tag-sightings to include.

Selection of tag-sightings to report

In an example embodiment, a tag may report or transmit some or all of its tag-sightings to nearby nodes (e.g. gNB or other tags) as part of a tag-report. It may use a policy to select which tag-sightings to report, if there are too many tag-sightings to report within the limited time window or with a limited energy budget on the tag. A particular choice in this embodiment is to not report tag-sightings that have been already reported by other nearby tags at least K times. Here K is a configurable or predefined parameter or threshold. If at least K reports of a tag-sighting have been seen from neighboring tags already, new reports for that tag-sighting are suppressed by the tag. Another policy may consist in suppressing the reporting of older tag-sightings in favor of new sightings that still need to be reported. The determination of older tag-sightings may be done based on the timestamp value in the corresponding tag-report and/or the tag's local time of recording the tag-sighting. The latter may typically be equal to the time of reception of the corresponding tag-report.

Another embodiment for selection is by using the priority value as described above. Such selection by priority may be combined with above selection of tag-sightings based on tag-sighting age, or with yet other criteria for selection of the most relevant tag-sightings.

Additional sending of tag-sightings directly to gNB

In an example embodiment, an in-coverage tag may periodically connect to a gNB and send tag-sightings collected so far over a regular (e.g., 5G NR) Uu uplink connection. Although this periodic connection may be carried out less frequently than would be possible to reduce energy consumption on the tag, it may however be useful in the following example scenarios:

- many tag-sightings already collected by the tag that do not fit into regular tag-reports (e.g., because there is a limited capacity for inclusion of tag-sightings);
- the tag needs to connect anyway to gNB to send sensor data, check for a firmware update availability, or check for a configuration update, or to update its firmware, and so on;
- tag-sightings already collected for tag-reports that are not to be forwarded anymore (e.g., because marked as "non-forwarding", or marked with hop-limit = 0) but would still be useful to report to gNB.

When thus connected to a gNB, the tag may report all tag-sightings that it has still available in its internal storage, even those that have already been included in tag-reports previously. Alternatively, to reduce the time and/or energy used for the transmission, it may also selectively include tag-reports (e.g., only report those tag-reports that haven't been transmitted yet within a tag-report, or only the highest-priority tag-sightings, and so on, optionally using a method similar to one of the selection methods as described in the present invention for selection of tag-sightings within a tag-report). Depending on tag implementation, a tag may remove some or all of the tag-sightings after reporting these to the gNB over a dedicated UL connection.

Protection of tag-sightings reported within a tag-report

In an example embodiment, a tag may protect the tag-sightings that it reports in order to avoid false reporting or tampering related to tag-reports including tag-sightings information. Such "malicious" reporting or tampering may be originated by a gNB, a tag, or an on-path attacker (e.g., UE, or a compromised device in the RAN or the CN) of another type. An example of tampering may be a node N1 receiving a genuine tag-report from tag T1 and adding this tag-report as a tag-sighting of a tag T2, thereby falsely suggesting that T2 instead of N1 has received the tag-report from T1. However, if T1 and T2 had the possibility to "digitally sign" a tag-sighting, then this kind of attack would be rendered much harder to conduct. Thus, an example solution may comprise sending tag-reports with payload embedded therein according to the following relationship:

$$\text{tag-report} =$$

$$\{ \text{timestamp, tx-power, payload, } H(\text{ tag-temp-id | timestamp | tx-power | payload }) \} \quad (11)$$

where the "payload" part may be one or more tag-sightings concatenated. The hash function H(.) validates the tag-sightings by the tag so that it may become tamper-proof when that tag-report itself is in turn forwarded in an embedded form within a tag-report. Although not included in the above relationship (11) of the present example embodiment, it is noted that the "config-data" item might also be included therein in the case of an alternative example embodiment.

Using a digest (summary/hash) form of a tag-sighting

The above "payload" part may be quite long in size when including tag-sightings with full "secure-section-data" or even longer when using tag-sightings with full "tag-report" data. In an example embodiment, instead of the full tag-sighting(s), a tag may also report a summary/digest tag-sighting which is a tag-sighting that is encoded as a shorter version of a tag-sighting than the full tag-sighting. For example, it may contain a digest (shorter) version of the secure-section-data only while the other data elements of the tag-sighting remain unchanged. Or alternatively, it may consist of a digest (shorter) version of the entirety of the data elements of the tag-sighting. It is noted that a digest of a secure-section-data might be effectively considered to be equal to a digest of a tag-report.

This allows a tag-report sent out by a tag to contain more tag-sightings packed into the same space, if at least one of the tag-sightings is included in its digest form. It is however noted that this does not work if every tag reports, for every tag-sighting, a digest tag-sighting instead of a full tag-sighting, because the location service would then have no way to reconstruct the original tag-sighting data associated to the digest form. Thus, there has to be at least one full (i.e., non-digest) tag-sighting that is sent to the location service (without getting lost in the process of getting there). If such one full version tag-sighting has been received at the location service, then other tag-sightings that include the exact same data (either wholly, or partially, e.g., only the secure-section-data may match exactly while the other fields may differ) may refer to the digest tag-sighting instead of the full tag-sighting, and the location service may still properly use these digest tag-sightings as if they were full tag-sightings.

It is noted that, some information is necessarily omitted by using a digest rather than a full version. Thus, the risk may be run that the digest may not be correlated anymore uniquely to a tag-sighting with 100% certainty. This is similar to the case of representing information with a hash: there may always be the probability of hash value collision, no matter how small. To mitigate this collision risk, the digest may then be chosen to be a number of bits of sufficient length (e.g., a hash) such that the probability of collision is rendered very small (e.g., < 0.0001%) with other tag-sightings generated in the same cell/area within a particular same time period (e.g., day, or hour). Because the digest (e.g., hash value) does not have to be unique across a wider area such as, e.g., a country, continent or worldwide, and also does not have to be locally unique over longer time scales (e.g., a day, week, or longer) the digest length may still be kept relatively small to achieve the benefits of size reduction of tag-sightings and/or ability to include more tag-sightings within a tag-report.

To achieve the feature that at least one full tag-sighting is received by the location service in addition to receiving digests of the same tag-sighting such that the digests can be referenced to the full tag-sighting with high probability, specific rules/strategies may be then needed for the sending of digests versus full version of tag-sightings. Thus, possible rules/strategies to achieve this may comprise at least one of the following:

- a tag may only report a digest of a secure-section-data within a tag-sighting if it has seen that a same secure-section-data is already included in tag-sightings of other in-coverage (peer) tags at least N times, wherein N is a configurable or predefined value (e.g., N = 3);
- the timestamp of a tag-sighting may be used as the digest, or as a part of the digest, acting as a unique ID of the tag-sighting within some local area. The local area may consist of an area of the tag reporting the above tag-sighting and of its immediate neighbor tags;
- the first N bytes of a secure-section-data and/or a short hash (e.g., 24-bit or 32-bit) of the secure-section-data may be used as a digest;
- an out-of-coverage tag may only start using a digest of a particular secure-section-data within its tag-sightings if it has seen that at least M other neighbor tags that are in coverage of a gNB have used the digest form of that secure-section-data within their reported tag-sightings, where M is a configurable or predefined value (e.g., M = 1). At the same time, an in-coverage tag starts using a digest of a particular secure-section-data after it obtains some form of confirmation that the gNB has received the full version of that secure-section-data embedded in a tag-sighting data element. Such confirmation may be implemented in various ways such as, e.g., by reporting a tag-sighting to the gNB (which may be in the usual way by broadcast within a tag-report, or by using a dedicated unicast connection to the gNB) and getting a confirmation message from the gNB regarding the reception of the tag-sighting. The confirmation message from the gNB may be in the same form as a tag-report as sent by tags, but now sent by the gNB during the next time window where the gNB includes the digest of the particular secure-section-data within the tag-sightings data structure as an indicator that knows this particular secure-section-data. Or, the confirmation message may have a specific other form different from the defined tag-report structure, such as a simple acknowledgement message that confirms the reception of the previous transmission of the tag of a tag-sighting or set of tag-sightings.

In an example particular embodiment, a location service seeing digest values being reported in tag-sightings for which it cannot find a corresponding full secure-section-data, may issue a request to one or more gNB(s) to perform a "paging" operation to request any tag still holding the full tag-sighting for this secure-section-data digest, to report that tag-sighting in full to its gNB. Such "paging" operation may be implemented by creating a temporary change in configuration data, for example, by extending the length of the "config-data" field with an appended bit string that encodes an identity of the secure-section-data digest being requested. This encoding may consist of, e.g., the full digest form of the secure-section-data, or may be in a shorter form, e.g., in a digest form of the digest.

Configuration data including predefined target parameters for tag-sightings to include in a tag-report

In an example embodiment, the "config-data" item may include a setting or a predefined number indicating the target number of tag-sightings to include or embed preferably, or maximally, in a tag-report. This enables RAN to find a trade-off between tag efficiency (i.e., smaller messages transmitted, thereby conserving power on the tags) and quality of available information (i.e., more tag-sightings available to reconstruct tag locations with higher accuracy and confidence level). For example, the predefined target number of tag-sightings may be, e.g., a 4-bit value which directly encodes a target number 0-15 for the number of tag-sightings to include preferably in a tag-report message. Or, it may be a 3-bit value which indicates one index 0-7 of a predefined lookup table where the table value determines the predefined target number. Optionally, if more high-priority tag-sightings are made and the predefined target number value has been exceeded, a tag may still decide to report these high-priority sightings.

In another example embodiment, the "config-data" item may optionally or additionally include a setting or a predefined number indicating the respective or overall target size (e.g., in terms of bytes) of tag-sightings to include or embed preferably, or maximally, in a tag-report.

In another example embodiment, the "config-data" item may optionally or additionally include a setting or a predefined number indicating the target number of digest and/or full tag-sightings to include or embed preferably, or maximally, in a tag-report.

Dealing with gNB cell boundaries

A problem may be related to time synchronization in the presence of several nearby cells. Figure 7 schematically shows an example OoC situation in a location system with two cells, wherein in-coverage tags 701, 702, 703, 704, 705 and out-of-coverage tags 711, 712, 713 represented by small circles and distributed through the two cells are to be located. Similar to figure 1, the tags 701, 702, 703, 704, 705 represented by small empty circles can transmit RF signals, which can be received at the respective nearest anchor nodes 721, 722, 723 represented by large circles and distributed through the two cells. The tags 711, 712, 713 represented by small filled circles are OoC and cannot transmit directly to any of the anchor nodes 721, 722, 723 but can transmit to, and also receive from, nearby tags (e.g., 701, 702, 704, 705), as represented by the two-way arrows connecting these tags. Suppose that one or more gNB antennas in a cell (e.g., cell 1) broadcast configuration information for determining an active time window for tags, there could be another gNB for another nearby cell (e.g., cell 2) determining different time window information. In such case, the tags 704, 713 located inbetween the two cells 1, 2 (i.e., the tags near the dotted line) would then have the problem that they could not communicate with the in-range tags 702, 703, 711, 712 of one part (e.g., those in "cell 1") if they synchronize to the time schedule of tags 705/anchor nodes 723 of the other part (e.g., those in "cell 2"), and vice versa. The inability for the tags of cell 1 to communicate in a shared time window with the tags of cell 2 is shown by the dotted arrows with symbol "?". Thus, the transmission and/or reception windows of these nearby, in-range tags will "miss" each other in time if the two cells 1, 2 configure different time windows, and possibly in frequency if the two cells 1, 2 configure different frequency resources for the tags.

In an example embodiment, on the boundary regions of different, e.g., N, gNBs/cells, there may be a different RAN configuration for tags present for each involved gNB/cell. In particular, time windows may be differently defined such that tags in a boundary region cannot receive tag-reports of each other tag disseminated in the areas in coverage of the cells, as illustrated, e.g., with the two cells of figure 7. In order to improve the accuracy and trustworthiness of location estimates for all tags involved, it would be beneficial if these tags on boundary regions would be still able to successfully transmit their tag-reports to all neighbor tags despite of the differences in configurations. Indeed, the more neighbor tags, potentially the better the location estimates and the stronger the evidence that a tag really was at a particular location at a particular time, thereby improving effectively the coverage area where the system operates.

A particular embodiment may be to allow a tag to be configured with N sets of configuration data, typically N = 2 or N = 3. For, e.g., N = 2, the tag may apply both configurations and monitor two time windows while the two configurations are active. In an example, the tag may determine these two configurations by observing different nodes in the area that broadcast different configurations. These different nodes may be, e.g., gNBs, Relay-UEs, NR SL SyncRef UEs in general, or peer tags. In case of too many conflicting config-data sets, any config-data sent by a gNB may take precedence over config-data sent by any one of the other nodes.

Another particular embodiment may consist in enabling one single gNB to also transmit configuration data of a nearby other gNB/cell in order to allow those tags that are located near a cell boundary to use it. A tag may then detect that it is near the cell boundary by trying out the second configuration data's time window for some time, and by counting the number of tag-sightings in this additional (second) time window. If the number is above a predefined threshold T, then it may know that it is located near the cell boundary, and it will continue to also monitor the additional time window. Otherwise, the tag may stop monitoring this additional time window or monitor it sporadically. Sporadic monitoring reduces the tag's energy consumption as compared to continuous monitoring of the additional time window, which is hence beneficial. It is noted that, due to tag displacement/movement, the tag may at a later point in time be moving towards the cell boundary or even into the coverage area of the second gNB/cell. Then, it again makes sense to apply the additional (second) configuration data. For this purpose, a tag may use available sensor data (e.g., from a motion sensor) as a decision criterion for deciding to perform a monitoring of the additional time window at the next occurrence of this time window, or not.

Another particular embodiment may consist in configuring neighboring cells with a same time window but with different frequency channel settings, thereby allowing all tags even at cell boundaries to use the same time window. However, this makes the overall system less flexible to adapting time window to the number of present active tags. Such second configuration data that only differs in frequency may be efficiently encoded using just one additional (second) field "frequency/channel", e.g., included in, or appended to, the "config-data" item of the tag-report.

Another particular embodiment may consist in including a "time-shift" parameter in the config-data that, when non-zero, may indicate a second configuration that is active for tags to use by applying a time shift of the time window. This has the benefit that a second config-data set may be encoded very efficiently. Hence, it may be considered a specific sub-case of the above-mentioned N = 2 case of different configurations. Similarly, for N=3, one might have a second time-shift parameter. Also, a variable length time-shift array of a length L = 0, ..., K might be encoded, allowing to respectively encode a number (1, ..., (K+1), respectively) of config-data sets that differ only in time window relative positioning. In an example embodiment, two neighboring gNBs may arrange coordination to align their config-data such that a simple "time-shift" or "frequency-change" may be efficiently encoded in "config-data" on both cells served by (or in coverage of) these gNBs.

In the example case of single config-data to realize N (= 2) different time windows that re-use the same duration of time window and the same frequency/channel:

- frequency/channel select: 8 bits;
- time window position select: 8 bits;
- time window duration select: 4 bits;
- time window shift select: 4 bits:

  • value 0 indicates "no time shift", i.e., no second/additional config-data set is active.

RAN adapting time window configuration to density of tags

In an example embodiment, during its operation, the RAN may adapt "config-data" settings to cater for required changes, e.g., due to a changing density of tags in a geographical area of interest. For example, if a RAN gNB observes that the "target duration" of the time window, as defined in the above table II related to option settings for the time schedule parameters of the "config-data" structure, is consistently exceeded by some number N of tags in coverage of the gNB, then a new time window configuration that allows a longer time window may be selected by the gNB. Such configuration change could also be coordinated by multiple gNBs of a RAN. Conversely, the "target duration" of the time window may be reduced by the gNB(s) of a RAN in case of low activity of tags in the geographical area of interest. Then, the resulting configuration data changes may be logged and kept by the observing RAN gNB(s) to be also reported to the location service, which may then use these config-data values for verification of tag-reports. In these examples, although a gNB or multiple gNBs or a RAN management function may determine the new configuration ("config-data"), this may also be realized by a negotiation procedure between the gNB(s)/RAN and the location service, or it may be a decision made by the location service only using status reports and/or operational constraints data from the gNB(s)/RAN as input data for making this decision.

Location service identifying true tag ID from secure-section-data

In an example embodiment, the location service may potentially receive many tag-sightings that contain the secure-section-data. These secure-section-data fields are embedded in tag-sightings generated by and/or reported by nodes in the cellular network that report (directly or indirectly) these tag-sightings to the location service, for example generated by gNBs, SL-UEs, tags (e.g., in-coverage tags reporting over UL unicast via a gNB to the location service), or other UEs capable of receiving tag-reports. It is noted that a tag-sighting may in turn contain (e.g., as an embedded data field), or refer to (e.g., by digest, hash, timestamp, etc.), one or more other tag-sightings as per the present invention. In particular implementations, a tag sighting may even contain a complete tag-report message, wherein this tag-report message may embed one or more further tag-sightings that include secure-section-data fields. It results therefrom that the location service may identify for a given secure-section-data the true tag ID that originally created this data by calculating (or computing) itself the cryptographic function F(.) of the relationship (3), for all known tag-temp-ids that are suspected to be, or were previously, in the geographic area of interest, until a matching tag may be found such that the computed function F(.) data matches the secure-section-data. For the status-bits, the location service also has to try (brute-force) all possible combinations potentially in combination with the aforementioned loop over all known tag-temp-ids. As an optimization, the location service may try first the combination of status-bits that was reported last time, under the assumption that this did not change in the meantime. If status-bits do not change regularly, this has the benefit of reducing the amount of computations that the location service needs to do on average.

The "tag-temp-id" and "status-bits" items in function F(.) of the relationship (3) are included in the cryptographic calculation but they are not sent over the wireless communication channel. Thus, the location service has to spend resources on trying all possible combinations, e.g., a few 1000s up to several millions of known tag-temp-ids in a particular target area (which may be defined, e.g., as a gNB/cell-coverage area or an intersection area of two or more gNB cells). Due to advancements in computation (e.g., clouds especially designed for efficient hash/crypto bulk operations as used for blockchains), such computation can be efficiently performed by a location service. It is noted that there may be a large number of candidate tag-temp-ids. Because the location updates may be relatively slow (e.g., tens of minutes, or hours) in some situations in order to conserve energy on the tags, an additional latency of calculation by the location service of a few seconds, or minutes, may still be acceptable.

It is noted that, in the example particular case where the location service cannot decode particular tag-reports, it may send these tag-reports to other location services to use, e.g., one location service from another operator that is covering the same geographic area, or one location service of a neighboring area. This has the benefit of potentially improving the location accuracy and trustworthiness of location estimates for the receiving location server.

Using 5G-NR ProSe open discovery messages

In an example embodiment based on the use of 5G-NR ProSe open discovery messages per 3GPP TS 24.554 (Release 17), a tag may then send out discovery messages in the role of an Announcing UE. The message is not encrypted at the ProSe layer but may be integrity-protected using a message integrity check (MIC). The MIC may be calculated based on a key derivation function (KDF) using a configured discovery user integrity key (DUIK) as input.

The DUIK may be configured on each tag similarly to tag-temp-id. Optionally, the tag-temp-id may be derived from the DUIK, or the DUIK may even be chosen equal to tag-temp-id. Optionally, a Monitoring UE receiving the ProSe discovery "announce" message may verify the message by having it verified by the core network ProSe-related services. This may work by means of reporting the reception of the discovery message per 3GPP TS 24.554 (Release 17). A tag may optionally act as a full Monitoring UE as specified by 3GPP (e.g., 3GPP TS 24.554 (Release 17)), or a tag may implement a subset thereof. Another (sidelink) UE that is not a tag may also act as a Monitoring UE.

The MIC of the discovery message may be considered a part of the tag-report message that a tag sends. The MIC may then be included within a tag-sighting, thereby allowing the relevant network service (e.g., ProSE Function or location service) to verify the MIC of each tag-report it processes. It is noted that this network service may have access to the configured DUIK for each tag (e.g., locally, or by interaction with a DDNMF, or otherwise) and that it may hence verify the MIC.

The above example embodiment may be described with reference to the discovery message flows of figure 6.1.3.3.1-1 "Integrity protection of the transmitted code" of 3GPP TS 33.503 v15.0.0. For a tag Announcing UE, the steps 1-4 are assumed to be done only once (while in network coverage) and not every time. For a Monitoring UE that is interested to have a tag-report verified by the network, the steps 11-15 can be used to do this. The DDNMF is involved in assigning keys, and an interaction between DDNMF and LMF may be required in order to assign the right keys for the tags to use.

Tag paging

In an example embodiment, an entity may determine that it does not have recent location data of a particular tag of interest, or that it has data but this is not accurate enough. This entity may be the location service itself, or a client of the location service. This embodiment enables to send a particular request or "paging message" in order to obtain more recent and/or more accurate location information for a particular tag of interest. This may be done by triggering more tag-sightings or more tag-reports for that tag.

The embodiment starts with the location service determining (e.g., by receiving from a client, or by its own initiative, or driven, e.g., by a service-level agreement (SLA) with the tag's customer, and so on) the currently active tag-temp-id of the tag of interest. This tag-temp-id may then be used as input to a cryptographic one-way function F(.) along with at least one other input known to both the location service and the tag. Several examples are shown hereafter:

- Paging-id = F( tag-temp-id, other-data );
- Paging-id = F( tag-temp-id, other-data, salt);
- Paging-id = F( tag-temp-id, salt ).

The "salt" item, if any is used, may be sent along with the Paging-id. However, the tag-temp-id is never sent out by the location service. This paging-id may be sent to one or more gNBs in the area where the tag was last seen and/or where it could have moved in the meantime based on predictions of tag mobility. The gNBs may now include this paging-ID information in extra tag-reports that they send out for being received by all tags in their service area(s). Alternatively, the gNBs may send additional messages of another type/format than the tag-report where the additional messages can be received by tags during the time window, similar to tag-reports.

Any tag receiving a paging-id tag-report may then check whether it is destined to itself by computing the function F(.). It is noted that paging-id may be precomputed in the case where the "salt" item is not used. If the tag is paged, then it may then send at least one new tag-report. Optionally, this new tag-report may include a "was-paged" bit set to 1, or alternatively, a priority field set to value "high", in the public data section, so that other tags doing a tag-sighting may know to include this tag-report with higher preference in the tag-sightings that they report to gNB and/or report to peer tags in their own tag-reports.

Optionally, a tag may implement a security measure to avoid a battery-drain attack due to an attacker sending many nonsense paging requests into a network causing a lot of additional processing actions on all tags receiving such paging request. For example, the number of paging requests may be limited to max N per time unit.

Tag paging using ProSe Model B discovery messages

In an alternative example embodiment to the above embodiment of tag paging, the tag paging may make use of restricted (non-open) ProSe Model B discovery messages. Then, a discovering entity may send out a protected discovery request message with particular parameters, to which a matching tag may respond with a discovery response message only if the request may be properly decrypted and if the tag ID is matching the "paged"/requested tag identity, i.e., the same "tag-temp-id".

Indirect tag paging or "have you seen this tag" concept

In an example embodiment, instead of just paging the tag of interest as above-mentioned, all tags may now be requested to report any information that they may still have stored about a particular tag but that they did not report yet due to, e.g., due to the selection process of what tag-sightings to include in their tag-report the particular tag was excluded from some, or all, tag-reports.

To this end, the location service may compose a paging request that includes an identifier of a recent tag-report or tag-sighting that the location service would like to know more about. This identifier of interest may be, for example, one of the following:

- first N bits of tag-report;
- first N bits of secure-section-data;
- (truncated) hash of tag-report;
- (truncated) hash of tag-sighting;
- a digest of a tag-sighting;
- (truncated) hash of secure-section-data;
- timestamp in public data section of tag-report;
- a combination thereof.

Preferably the identifier is as short as possible. In an example sub-embodiment, variable-length identifiers may be used: the longer, the higher the probability of only matching uniquely to the intended tag-report, e.g., using a Bloom filter data structure.

Similar to the above tag-paging embodiments, the location service may send the request to target gNBs and these gNBs may then distribute the paging request to tags in their service area. Now, any tag that receives this request and still has a matching tag-report and associated tag-sighting metadata buffered (which may be recent or even a bit older) may prioritize that tag-report for inclusion as a tag-sighting in its next tag-report sent to gNB (or sent as broadcast in the form of a tag-report to gNBs and other tags, in general). Thereby, the gNBs may receive more tag-sightings for this particular tag-report, and the location service may thus better estimate where the tag of interest is located and/or was located in the past. Also, when the tag-of-interest sees either the paging request, or that an older tag-report of itself is sent around by other tags, or a combination thereof, it may react by immediately sending a newer tag-report which may, for example, have a higher than normal assigned priority (as above-mentioned, a tag-report may include a priority value (e.g., 2-bit) in the public data section). This allows the location service to then get more recent location data on the tag of interest, apart from the older tag-report(s) that it requested in order to better reconstruct the current location of the tag as well as the potential motion trajectory that led to this location.

It is noted that, because tags do not use any identity information in their tag-report and other tags cannot thus establish the true identity of a tag which has sent a tag-report, the "have you seen this tag" concept may necessarily work by not requesting about a specific tag ID (e.g., "tag-temp-id"), but rather by requesting about other identifiable information, e.g., a tag-report or a tag-sighting, referenced by an identifier thereof, in the present case.

In an additional example sub-embodiment, the location service may request a particular timestamp value or timestamp range in its paging request in order to collect data, or collect more data, about a particular tag-report that was gone missing or for which not enough tag-sightings were collected. For example, if tag T reported at times t = 123, 178, and 181, then the location service may conclude that it is missing some tag-reports for T during the period t = [124, 177] so that it may page for any tag-reports in the range from 124 to 177. In another example, if the timestamp t in a tag-report is encoded as a sequence number (counter) and the location service has tag-reports with t = 123, 125, 126, then it may page for any tag-reports with the missing sequence number t = 124.

In an optional embodiment, a tag may implement a security measure to avoid a battery-drain attack due to an attacker sending many nonsense indirect-paging requests into a network, wherein the number of such requests may be limited to max N per time unit with N as a preconfigured value (e.g., N = 2 for a time unit of 10 minutes).

Tags acting as NR sidelink SyncRef UEs without being SL-UEs or Relay UEs

In an example embodiment, some tags with higher capabilities (e.g., larger battery capacity, or energy supply from the environment (e.g., solar) for certain time periods) may act as a NR sidelink SyncRef UE to help other nearby tags that are OoC to synchronize. By acting to provide SyncRef signals, these SyncRef tags do not need to act as full sidelink UEs (i.e., SL-UEs) or Relay UEs (cf. 3GPP TS 38.331 (Release 16)). Although no specific changes are needed for providing a basic SyncRef UE function, a simplified/lower-energy-consuming SyncRef UE approach, compared to the current 3GPP specified approach, may be however needed for tags to act as NR sidelink SyncRef UEs while maintaining their low energy consumption and/or low-cost hardware properties. A SyncRef-capable tag may automatically turn on and off its transmission of NR sidelink synchronization signals (or the corresponding simplified/lower-energy-consuming synchronization signals) based on the local availability of other SyncRef UEs in combination with internal availability of sufficient energy for operation as a SyncRef UE.

To summarize, a system and method for managing and configuring a communication device in a cellular communication network with localization functionality that cooperatively works with other communication devices to report communication device locations to a location service is described herein. In particular, the present invention is directed to a tag as a communication device that may be a low-power, low-complexity tag. Active time-window synchronization such that tags can "sleep" most of the time to conserve energy can be provided. Privacy and security of data reported by the tags can be achieved: each tag can report its identity through a cryptographic function computation result such that only the location service can derive the real/true tag identities by combining all the collected tag reports with knowledge of tag identifiers (e.g., from a secured database). Reports from out-of-coverage tags can be relayed by in-coverage tags to increase the overall reliability and coverage area where the location service can be provided.

The overall system operation for a specific tag may be recapitulated as follows:

- a tag sends secure tag-reports (report messages) in a periodic fashion, e.g., over SL discovery messages;
- tag-reports are collected by nodes such as collecting gNBs, and/or collecting "tag" UEs, and/or collecting SL-UEs, and/or other collecting UEs not using SL in the case where the present invention is implemented using a type of radio interface other than "SL". The collecting UEs collect the tag-reports by creating tag-sightings (observation reports) that contain metadata about the received tag-reports, and report the tag-sightings either directly to the location service, and/or to the gNB in coverage area that in turn forwards the received tag-sightings including its own generated tag-sightings to the location service:

  • a collecting (tag) UE that is not in gNB coverage may include tag-sightings in its own tag-report sent to neighboring tags;
  • a collecting (tag) UE that is in gNB coverage may include tag-sightings in some particular cases, e.g., to include a digest of a tag-sighting which signals to OoC UEs that they may start using the digest version of the tag-sighting therefrom;

- the location service then extracts/estimates the location and/or locationtrajectory of each tag based on the combined locations of the collecting nodes that reported them, including both collecting gNBs and collecting UEs;

  • if collecting UEs have an unknown location (e.g., because they are tags themselves), then the location service can also estimate the locations for these. Overall, this consists in solving a multi-variable non-linear optimization problem with noisy/sparse data inputs and parameter constraints applied. The use of a maximum-likelihood estimation model may be useful for solving this optimization problem;

- the location service then provides authorized clients with information about the identified tags and their estimated locations, each client receiving only information for the subset of tags that the client is authorized for.

It is noted that, even if a tag cannot directly reach itself an in-coverage collecting UE or a gNB, other nearby tags can gather the tag-reports of that tag including the embedded tag-sightings and then forward them towards any gNB (if possible) or otherwise to in-coverage collecting UEs and thereby towards the corresponding gNB.

Although some embodiments of the present invention are described based on tag location, it is noted that other tag applications are not excluded. A tag may be read to obtain a feature of the tag. This feature may include an identity of the tag. By knowing to which base station the identity of the tag is delivered, then it may be possible to infer the (rough) location of the tag. The feature may also include a device type referring to the type of device it is or referring to the type of device/product it is attached to.

While the present invention has been illustrated, and described in detail in the drawings and foregoing description, such illustration and description are to be considered illustrative or exemplary and not restrictive. The invention is not limited to the disclosed embodiments. The proposed embodiments can be implemented in all types of wireless networks, e.g., it can be applied to devices communicating using cellular wireless communication standards, specifically the third generation partnership project (3GPP) 5G and new radio (NR) specifications. The 5G wireless communication devices can be different types of devices, e.g., mobile phones, smart watches, smart tags for location tracking and logistics, vehicles (for vehicle-to-vehicle (V2V) communication or more general vehicle-to-everything (V2X) communication), V2X devices, IoT hubs, IoT devices, including low-power medical sensors for health monitoring, medical (emergency) diagnosis and treatment devices, for hospital use or first-responder use, virtual reality (VR) headsets, and so on.

Although some embodiments are described for sidelink communication, the present invention may also be implemented on the basis of already existing 5G ProSe functionalities (e.g., as found in 3GPP TS 24.554 (Release 17)), as described hereafter:

- a single ProSe discovery relay service code (RSC) may be linked to a specific set of discovery keys. A particular RSC may determine a particular group of tags that cooperatively help each other in determining location, and each tag may have a different discovery user integrity key (DUIK), DUIK_i. This DUIK_i may effectively play the role of tag-temp-id, or the tag-temp-id may be derived from DUIK_i. With that specific DUIK_i, the tag may sign the discovery message with message integrity code (MIC), MIC_i;
- If there is a DUIK_i per Tag i, then the DDNMF network function may go through all DUIKs related to an RSC to identify the one that may be used to verify the MIC. It is noted that the MIC in the current 3GPP ProSe specifications is only 32 bits and that if there is a large number of devices in the group, e.g., $2^{16}$ devices, each device with a different DUIK_i key, it is then likely that two devices at some point will generate the same MIC:

  • thus, either longer MIC may need to be specified for the ProSe specs for this purpose, or limitation of the Tag group size may be needed;
  • another option may be that if a Tag identity collision is suspected, then its identity may be verified by requesting or obtaining another discovery message at a later point of time from that same Tag. Since the MIC_i may then be computed with a different UTC timer, the MIC_i will be different and the same collision may thus be not expected to occur again so that the actual identity of the device may be retrieved retrospectively;

- A problem of using the DUIK_i to identify the Tag is that the monitoring UE receiving the discovery message cannot really check whether the Tag is authentic or not. Thus, all discovery messages may need to be sent to the CN/location service for verification, and this may be a problem (e.g., a denial of service (DoS) attack risk). A solution may then be to keep the DUIK for its original purpose as defined by said 3GPP specifications, i.e., of using a single DUIK associated to the RSC to verify a received message, and to have the monitoring UE to verify it as such as a first line of defence against DoS attacks. The Tag and LMF have a different unique key (or tag-temp_id as described in in the above example embodiments of the present invention) to create a secure envelope that allows the location service to verify the Tag's identity;
- the confidentiality option of ProSe restricted discovery may be used, In this case, discovery messages may be encrypted. Assume that all tags in a Tag group use the same discovery user confidentiality key (DUCK), then the DUCK may be used to encrypt the Tag's tag-temp-id or its fixed tag-id. The LMF may then be in charge of decrypting and the DUCK shall not be provided to the monitoring UE. Thus, Tags in other groups may help to receive messages of the Tag and forward these messages to the LMF (location service);

- 5G ProSe may specify quite a bit of configuration (e.g., about identifiers, keys, and so on) for a UE, thereby rendering the Tag unnecessarily complex and letting the Tag use more energy than strictly needed. Thus, as an alternative to an explicit configuration during operation, factory/vendor pre-configuration of a Tag may instead be taken into consideration. This means that a Tag may be pre-configured with a fixed tag-id and that the Tag may keep sending this ID in a secure way, or may send a tag-temp-id that is securely derived from tag-id:

  • an operator may ship them pre-configured to the customer who bought them and may attach the Tags to the items to track. The customer may then track the Tags by either using its own infrastructure (e.g., its own UEs), or renting the operator's infrastructure, or combining both. To do so, there may be needed to have a secure communication channel between vendor/operator and customer to communicate the tag-ids of the bought Tags;

- an additional or optional solution for obtaining configuration-less Tag may be to (re-)configure Tags using ProSe discovery messages:

  • for example, in the factory at the vendor or at the customer site, once Tags have been purchased, an owner/operator may send a ProSe restricted discovery (Model B) message with new (configuration) parameters for the Tag. For example, these parameters may include an updated identity (tag-id) or other relevant parameters such as RSC of the Tag group, key material, and so on. The reply to that message may be an acknowledgement in the form of a discovery message to confirm the new configuration has been applied. Thus, Tags may just send/receive discovery messages, and they may not need to implement any other type of communication (e.g., UL, DL, ProSE SL direct communication, and so on) to simplify tag design and lower its cost.

The present invention may also be implemented by combining one or more of the above example embodiments using 5G ProSe and example embodiments using non-5G ProSe. In that case, the tag-temp-id identities of Tags may, e.g., be linked to, or derived from, 3GPP-defined credentials for the UE and 3GPP-defined keys.

Furthermore, the present invention can be applied to low-cost, low-power tag tracking systems integrated into an existing cellular network infrastructure (e.g., 5G, 6G), wherein the tags can be mobile, or static/stationary, or semi-static/semi-stationary.

In particular, the example embodiments of the present invention can apply in at least the following domains:

IoT applications involving low-cost IoT sensor tags (e.g., smart city) embedded in the environment:

  • wherein energy for tag operation may be harvested from the environment and/or come from a battery that lasts for multiple years;
  • in mobile goods/objects/vehicles for industry applications;

- logistics for tracking of goods:

  • tags may be embedded in parcels or containers;
  • during some periods (e.g., in a container at sea), very limited updates of location are needed. It may be sufficient to verify that a parcel is still close to other parcels. During other periods (e.g., transfer at a logistics center), more frequent location/status updates may be needed;
  • sensors in tags may report status of the goods (e.g., temperature, freshness, or experienced motion impacts);
  • anti-theft tags;

- indoor location systems;
- hospital logistics for location tracking of goods, equipment, personnel.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality such that "a" or "an" may correspond to "one or more". The foregoing description details certain embodiments of the invention. It will be appreciated, however, that no matter how detailed the foregoing appears in the text, the invention may be practiced in many ways, and is therefore not limited to the embodiments disclosed. It should be noted that the use of particular terminology when describing certain features or aspects of the invention should not be taken to imply that the terminology is being re-defined herein to be restricted to include any specific characteristics of the features or aspects of the invention with which that terminology is associated. Furthermore, in those instances where a convention analogous to "at least one of A, B, and C, etc. " is used, in general such a construction is intended in the sense one having skill in the art would understand the convention, e.g., "a system having at least one of A, B, and C" would include but not be limited to systems that have A alone, B alone, C alone, A and B together, A and C together, B and C together, and/or A, B, and C together, etc. In those instances where a convention analogous to "at least one of A, B, or C, etc. " is used, in general such a construction is intended in the sense one having skill in the art would understand the convention, e.g., "a system having at least one of A, B, or C" would include but not be limited to systems that have A alone, B alone, C alone, A and B together, A and C together, B and C together, and/or A, B, and C together, etc. It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B.

A single unit or device may fulfill the functions of several items recited in the claims. The mere fact that certain measures are recited in mutually different dependent claims does not indicate that a combination of these measures cannot be used to advantage.

The described operations can be implemented as program code means of a computer program and/or as dedicated hardware of the commissioning device or luminaire device, respectively. The computer program may be stored and/or distributed on a suitable medium, such as an optical storage medium or a solid-state medium, supplied together with or as part of other hardware, but may also be distributed in other forms, such as via the Internet or other wired or wireless telecommunication systems.

## Claims

1.    A communication device (401) in a wireless network, wherein a feature of the communication device (401) is to be determined, the communication device (401) as a node being adapted to:

generate a first secure report message (430);
receive configuration information (432) from a base station device (421), directly if the communication device (401) is in coverage of the base station device (421); and
transmit the first secure report message (430),
wherein the configuration information (432) includes at least information about at least a time window during which the communication device (401) is adapted to transmit the first secure report message (430) to the base station device (421) and/or to another node and receive a second secure report message from the other node, and/or frequency resources that the communication device (401) is adapted to use to transmit the first secure report message (430) to the base station device (421) and/or to another node and receive a second secure report message from the other node.

2.    The communication device (401) of claim 1, wherein the transmission of the first secure report message (430) is performed at a time window and/or using frequency resources that depend on an identifier.

3.    The communication device (401) of any of the preceding claims, wherein the communication device (401) is adapted to:

receive the second secure report message (435) from one or more other nodes (411);
in response to receipt of at least some second secure report messages (435), generate a respective observation report associated with the receipt of the at least some second secure report messages (435); and
selectively embed the observation reports in the first secure report message (430).

4.    The communication device (401) of any of the preceding claims, wherein the communication device is adapted to:

receive a timing reference from a synchronization signal when the communication device is in coverage of a synchronization source; and
infer a timing reference from the receipt of at least one second secure report message from at least one nearby node among the one or more other nodes when the communication device is not in coverage of a synchronization source.

**5.** The communication device (401) of any of the preceding claims, wherein the communication device is adapted to: embed the received configuration information as a configuration data field in the first secure report message.

**6.** The communication device (401) of claim 5, wherein the configuration data field comprises at least a predefined target number type to control and/or influence and/or constrain a size of the first secure report message.

**7.** The communication device (401) of any of the preceding claims, wherein the communication device is adapted to: control its transmission power for transmitting the first secure report message, by using a predefined transmission control policy that is determined based on the received configuration information (432).

**8.** The communication device (401) of any of the preceding claims, wherein the first secure report message comprises at least a secure section data field being an output of a cryptographic function over a plurality of data items.

**9.** The communication device (401) of claim 8, wherein the plurality of data items of the secure section data field comprises at least a temporary identifier of the communication device.

**10.** The communication device (401) of any of the preceding claims, wherein the communication device is adapted to:

embed a payload in the first secure report message; and
transmit the first secure report message containing the embedded payload, the payload being an output of a cryptographic function locally computed.

**11.** The communication device (401) of claim 3 or any of the preceding claims when dependent on claim 3, wherein selectively embedding the observation reports in the first secure report message comprises:

selecting observation reports among the observation reports that have been previously transmitted a number of times equal to or greater than a predefined threshold; and/or
selecting the older observation reports among the observation reports; and/or
selecting observation reports among the observation reports that have no indication that the selected observation reports have been transmitted by a node in coverage of the base station device,
and
preventing the selected observation reports from being embedded in the first secure report message to be not transmitted, during the time window, as part of the first secure report message, while transmitting the non-selected observation reports among the observation reports.

**12.** The communication device (401) of any of the preceding claims, wherein the communication device is adapted to: automatically extend the time window itself if no time slot within the time window and on a transmission frequency channel of the frequency resources is free, or if a percentage of occupied time slots within the time window is above a predefined threshold.

**13.** The communication device (401) of any of the preceding claims, wherein the communication device is adapted to:

receive another configuration information from another base station device if the communication device is located on a cell boundary separating a cell in coverage of the base station device and another cell in coverage of the other base station device, the other configuration information including at least information about another time window during which the communication device is adapted to transmit and receive and about other frequency resources that the communication device is adapted to use to transmit and receive; and
conditionally transmit during both the time window and the other time window.

**14.** A method of determining a feature of a communication device (401) as a node in a wireless network, wherein the method comprises:

generating a first secure report message (430);
receiving configuration information (432) from a base station device (421), directly if the communication device (401) is in coverage of the base station device (421); and
transmitting the first secure report message (430),
wherein the configuration information (432) includes at least information about at least a time window during which the communication device (401) is adapted to transmit the first secure report message (430) to the base station device (421) and/or to another node and receive a second secure report message from the other node, and/or frequency resources that the communication device (401) is adapted to use to transmit the first secure report message (430) to the base station device (421) and/or to another node and receive a second secure report message from the other node.

15. A system comprising, in a wireless network, at least a plurality of communication devices (401) according to any of claims 1 to 13, a plurality of base station devices (421), and a core network location service (440, 441) adapted to determine a location estimate of a target communication device among the plurality of communication devices (401), wherein the core network location service is adapted to receive a secure report message sent as an unicast message from a communication device of the plurality of communication devices, or to receive a variation of the secure report message directly from a base station device of the plurality of base station devices if the base station device receives the secure report message from the communication device in coverage of the base station device, the variation of the secure report message corresponding to the secure report message or at least one secure element thereof embedded within an observation report generated by the base station device.

Fig. 1

Fig. 2

**Fig. 3**

**Fig. 4**

# Fig. 5

621

Tx@
t=4 (cfg)

Tx@
t=3

611

601

Tx@
t=2

612

613

Tx@
t=1

**Fig. 6**

y

cell 1

cell 2

721

701

712

?

711

713

705

?

703

?

702

?

704

722

723

x

**Fig. 7**

Fig. 8

Fig. 9

# Fig. 10

# Fig. 11

Europäisches Patentamt

European Patent Office

Office européen des brevets

# EUROPEAN SEARCH REPORT

Application Number

EP 22 18 3748

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/159147 A1 (RYU JUNG HO [US] ET AL) 23 May 2019 (2019-05-23) | 1-4, 7-10,12, 14,15 | INV. H04W4/02 H04W4/70 H04W4/80 |
| A | * paragraph [0061] – paragraph [0115]; figures 1, 2 * <br> * paragraph [0235] * | 5,6,11, 13 | |
| X | US 2021/021327 A1 (JORGUSESKI LJUPCO [NL] ET AL) 21 January 2021 (2021-01-21) | 1-4, 7-10,12, 14,15 | |
| A | * paragraph [0054] * | 5,6,11, 13 | |

TECHNICAL FIELDS SEARCHED (IPC)

H04W

The present search report has been drawn up for all claims

| Place of search | Date of completion of the search | Examiner |
|---|---|---|
| The Hague | 7 December 2022 | Gutiérrez García, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 18 3748

This annex lists the patent family members relating to the patent documents cited in the above-mentioned European search report.
The members are as contained in the European Patent Office EDP file on
The European Patent Office is in no way liable for these particulars which are merely given for the purpose of information.

07-12-2022

| Patent document cited in search report | | Publication date | Patent family member(s) | | Publication date |
|---|---|---|---|---|---|
| US 2019159147 | A1 | 23-05-2019 | CN | 111357338 A | 30-06-2020 |
| | | | EP | 3714646 A1 | 30-09-2020 |
| | | | US | 2019159147 A1 | 23-05-2019 |
| | | | WO | 2019103832 A1 | 31-05-2019 |
| US 2021021327 | A1 | 21-01-2021 | EP | 3643127 A2 | 29-04-2020 |
| | | | EP | 3937572 A1 | 12-01-2022 |
| | | | US | 2021021327 A1 | 21-01-2021 |
| | | | WO | 2018234495 A2 | 27-12-2018 |

EPO FORM P0459

For more details about this annex : see Official Journal of the European Patent Office, No. 12/82